(19) Europäisches Patentamt
European Patent Office
Office européen des brevets

(11) EP 3 987 450 B1

(12) EUROPEAN PATENT SPECIFICATION

(45) Date of publication and mention
of the grant of the patent:
**14.02.2024 Bulletin 2024/07**

(21) Application number: **21721644.9**

(22) Date of filing: **25.03.2021**

(51) International Patent Classification (IPC):
**G06N 3/084** (2023.01)     **G06N 3/045** (2023.01)

(52) Cooperative Patent Classification (CPC):
**G06N 3/084; G06N 3/045**

(86) International application number:
**PCT/JP2021/014106**

(87) International publication number:
**WO 2022/054324 (17.03.2022 Gazette 2022/11)**

(54) **MULTI-DIMENSIONAL DEEP NEURAL NETWORK**

MEHRDIMENSIONALES TIEFES NEURONALES NETZ

RÉSEAU DE NEURONES PROFOND MULTIDIMENSIONNEL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.09.2020 US 202017016534**

(43) Date of publication of application:
**27.04.2022 Bulletin 2022/17**

(73) Proprietor: **MITSUBISHI ELECTRIC CORPORATION**
**Chiyoda-ku**
**Tokyo 100-8310 (JP)**

(72) Inventors:
• **HORI, Chiori**
  **Cambridge, Massachusetts 02139-1955 (US)**
• **GAO, Peng**
  **Cambridge, Massachusetts 02139-1955 (US)**
• **GENG, Shijie**
  **Cambridge, Massachusetts 02139-1955 (US)**
• **HORI, Takaaki**
  **Cambridge, Massachusetts 02139-1955 (US)**
• **LE ROUX, Jonathan**
  **Cambridge, Massachusetts 02139-1955 (US)**

(74) Representative: **Pfenning, Meinig & Partner mbB**
**Patent- und Rechtsanwälte**
**An der Frauenkirche 20**
**01067 Dresden (DE)**

(56) References cited:
**US-A1- 2014 180 989**

• **VELICKOVIC PETAR ET AL: "X-CNN: Cross-modal convolutional neural networks for sparse datasets", 2016 IEEE SYMPOSIUM SERIES ON COMPUTATIONAL INTELLIGENCE (SSCI), IEEE, 6 December 2016 (2016-12-06), pages 1-8, XP033066384, DOI: 10.1109/SSCI.2016.7849978 [retrieved on 2017-02-09]**
• **VERONICA MORFI ET AL: "Deep Learning for Audio Transcription on Low-Resource Datasets", ARXIV.ORG, CORNELL UNIVERSITY LIBRARY, 201 OLIN LIBRARY CORNELL UNIVERSITY ITHACA, NY 14853, 10 July 2018 (2018-07-10), XP081246227,**
• **XINWEI GENG ET AL: "Adaptive Multi-pass Decoder for Neural Machine Translation", PROCEEDINGS OF THE 2018 CONFERENCE ON EMPIRICAL METHODS IN NATURAL LANGUAGE PROCESSING, 1 January 2018 (2018-01-01), pages 523-532, XP055720998, Stroudsburg, PA, USA DOI: 10.18653/v1/D18-1048**
• **YE BAI ET AL: "Listen Attentively, and Spell Once: Whole Sentence Generation via a Non-Autoregressive Architecture for Low-Latency Speech Recognition", ARXIV.ORG, CORNELL UNIVERSITY LIBRARY, 201 OLIN LIBRARY CORNELL UNIVERSITY ITHACA, NY 14853, 2 August 2020 (2020-08-02), XP081732398,**

**Description**

[Technical Field]

The present invention relates generally to artificial neural network techniques, and more particularly to methods and system including a multi-dimensional deep neural network.

[Background Art]

Artificial neural networks (ANNs) are computing systems inspired by biological neural networks of a human brain. Such computing systems are widely used in a variety of fields, such as Natural Language Processing (NLP), Image Processing, Computer Vision and/or the like. Typically, an artificial neural network (ANN) is a directed weighted graph with interconnected neurons (i.e., nodes). These interconnected neurons are grouped into layers. Each layer of the ANN performs a mathematical manipulation (e.g., non-linear transformation) on input data to generate output data. The ANN may have an input layer, a hidden layer, and an output layer to process the input data. In between each of the layers there is an activation function for determining the output of the ANN. To increase accuracy of processing the input data, some ANNs have multiple hidden layers. Such an ANN with multiple layers between the input layer and the output layer is known as a deep neural network (DNN). The interconnected neurons of the DNN contain data values. When the DNN receives the input data, the input data is propagated in forward direction through each of the layers. Each of the layers calculates an output and provides the output as input to the next layer. Thus, the input data is propagated in a feed-forward manner. For instance, feed-forward DNNs perform function approximation that filters inputs of weighted combinations through non-linear activation functions. The non-linear activation functions are organized into a cascade of fully connected hidden layers.

Such DNNs are required to be trained to accomplish tasks of the variety of fields. However, training the DNNs is a tedious process when the number of hidden layers increases for better approximation. For instance, activation functions in the DNN cause complex problems, such as vanishing gradient problem during backpropagation of the objective function gradient among the layers of the DNN. The backpropagation determines gradients of a loss function with respect to the weights in the DNN. However, the large number of hidden layers in the DNN may drive gradients to zero (i.e., the vanishing gradient problem), which may be far from an optimum value. Further, the DNN may suffer difficulties in optimizing weights of the neurons due to the large number of hidden layers. This may delay the training process of the DNN and may slow down improvements of model parameters of the DNN, which affects accuracy of the DNN. The vanishing gradient problem in the training process of the DNN may be overcome by introducing residual neural network layers in the DNN.

A residual neural network (ResNet) utilizes skip connections that add outputs from previous layers of the DNN to the input of other non-adjacent layers. Typically, the ResNet may be implemented with double or triple layer of skip connections. Furthermore, the ResNet allows skipping of layers only in forward direction of input propagation. This prevents forming of cycles or loops, which are computationally cumbersome in both the training and inference processes of the DNN. However, the forward direction of propagating the input may be an undesirable limitation for some situations. It may be possible to compensate for this by increasing the number of hidden layers. As a consequence, number of parameters may increase as additional hidden layers are increased, while propagating the input in the forward direction. The increase in the number of parameters may also delay the training process, which is undesirable.

Accordingly, there is a need for a technical solution to overcome the above-mentioned limitation. More specifically, there is need to train neural networks with multiple hidden layers in an efficient and feasible manner, while avoiding the vanishing gradient problem and problem of increase in number of parameters.

US 2014/0180989 A1 discloses a parallel convolutional neural network (CNN). The CNN is implemented by a plurality of convolutional neural networks each on a respective processing node. Each CNN has a plurality of layers. A subset of the layers are interconnected between processing nodes such that activations are fed forward across nodes. The remaining subset is not so interconnected. Non-patent literature XINWEI GENG ET AL: "Adaptive Multi-pass Decoder for Neural Machine Translation",PROCEEDINGS OF THE 2018 CONFERENCE ON EMPIRICAL METHODS IN NATURAL LANGUAGE PROCESSING, 1 January 2018 (2018-01-01), pages 523-532, XP055720998, Stroudsburg, PA, USA discloses an architecture of an adaptive multi-pass decoder in which a same parameters set of decoder and the corresponding attention is shared among different decoding passes.

Further prior art can be found in the following publication: P. Velickovic, Duo Wang, N. D. Lane and P. Liò, "X-CNN: Cross-modal convolutional neural networks for sparse datasets," *2016 IEEE Symposium Series on Computational Intelligence (SSCI)*, 2016, pp. 1-8, doi: 10.1109/SSCI.2016.7849978.

**Summary**

The invention is defined in the attached set of claims.

It is an object of some embodiments to provide an artificial neural network (ANN), such as deep neural network (DNN) having a deep architecture with multiple hidden layers that allows connections among layers regardless of their respective position in the ANN. A DNN has a plurality of layers, where each layer of the plurality of layers may be connected to respective non-adjacent layers of the plurality of layers. Additionally, or alternatively, it is an object of some embodiments to increase number of hidden layers of the DNN without increasing number of trained parameters of such DNN. Additionally, or alternatively, it is an object of some embodiments to provide a DNN architecture that allows reusing outputs of different layers to enhance performance of the DNN without increasing the number of parameters.

Some embodiments are based on understanding of advantages of sharing information among layers of DNN in both directions of data propagation. For example, while outputs from previous layers of the DNN can be added to the input of other adjacent and non-adjacent layers of DNN, it can also be beneficial to have outputs computed at later layers to help better process the input data or intermediate outputs from earlier layers. In such a manner, the data can be exchanged in both directions to add additional flexibility on data processing. However, propagating data in both directions may create logical loops jeopardizing training and execution of DNNs.

Some embodiments are based on realization that this loop problem may be addressed by rolling out DNN in a direction different from a direction of data propagation by cloning or duplicating parameters of DNN. For example, some embodiments are based on realization that a sequence of hidden layers that sequentially processes an input can provide insightful information for another parallel sequence of hidden DNN layers that also processes sequentially the same input. In some implementations, both sequences are feed-forward neural networks with identical parameters. In such a manner, having multiple sequences of hidden layers does not increase the number of parameters. In some embodiments, at least some layers of one sequence of hidden layers are connected to at least some layers of another sequence of hidden layers to combine at least some intermediate outputs of the sequence of hidden layers with at least some inputs to another sequence of hidden layers. Each of the sequences of hidden layers corresponds to a DNN. The sequences of hidden layers, i.e. the DNNs are arranged in a direction different from a direction of propagation of the input in the layers of each of the DNNs. To that end, the DNNs in the sequence of DNNs are connected to one another. For example, at least some layers of first DNN are connected to at least some layers of subsequent DNNs. As used herein, the two layers are connected when at least a function of an output of a layer forms at least part of an input to another connected layer. The connections between the DNNs combine to form a single neural network, such as a multi-dimensional neural network. As used herein, in the multi-dimensional neural network, the input data is propagated along multiple directions, i.e., from input to output layer of a DNN and across the sequence of DNNs forming the multi-dimensional neural network.

In various embodiments, the multi-dimensional neural network may have different numbers of DNNs. In one embodiment, the multi-dimensional neural network includes two DNNs, as an inner DNN and an outer DNN. Each of the DNNs, i.e. the inner DNN and the outer DNN includes one or more intermediate (hidden) layers. When the layers of the inner DNN are connected to the layers of the outer DNN, the layers are connected on an input/output level in order to preserve dimensions of the inner DNN and outer DNN layers. For instance, an output of a layer of the inner DNN may be combined with an input to a layer of the outer DNN by adding them together.

The layers of the inner DNN and the layers of the outer DNN have a plurality of connections. For example, all layers of the inner DNN can be connected to all layers of the outer DNN. Such a connection pattern is referred herein as full connection, making the multi-dimensional neural network being fully connected. Alternatively, the multi-dimensional neural network can be partially connected. For example, in a partially connected multi-dimensional neural network, one or more layers of the inner DNN can be connected to multiple layers of the outer DNN. Additionally, or alternatively, in a partially connected multi-dimensional neural network, multiple layers of the inner DNN can be connected to a layer of the outer DNN.

Different connection patterns used by different embodiments allow to adapt the multi-dimensional neural network for different applications. For example, in some embodiments, the output of a given layer of the inner DNN may only contribute to the input of a unique layer of the outer DNN. In some embodiments, outputs of two given layers in the inner DNN may contribute to the input of the same layer of the outer DNN.

In addition to different patterns of the connections between layers of different DNNs in the multi-dimensional neural network, some embodiments use the connections of different types. For example, various embodiments use hard connections, soft connections or combinations thereof. For example, in a hard connection, outputs of layers of the inner DNN are added to inputs of layers of the outer DNN in their entirety. That is, the layers are either connected or not. If the layers are connected, the output of one layer is combined with the input of another layer without additional scaling and/or weight multiplication. If the layers are not connected, nothing from the output of the layer is added to the input of the other layer.

Hence, according to the principles of hard connection, the output of a layer of the inner DNN may either contribute to the input of a layer of the outer DNN or may not contribute to the input of that layer of the outer DNN. The principle of data propagation according to hard connections differs from principles of data propagation between layers of a single DNN. Thus, the hard connections allow to decouple principles of data propagations in different directions. In turn, such a decoupling allows to search for a better pattern of hard connections on top of training the parameters of DNNs, which adds additional flexibility into the architecture of multi-dimensional neural network.

In some embodiments, during the training process of the multi-dimensional neural network, the pattern of hard connections is selected among a plurality of patterns of connections. For each selected connection pattern, corresponding multi-dimensional neural network is trained. The trained multi-dimensional network that gives best performance is selected among all trained multi-dimensional networks. More specifically, the hard connection patterns are selected based on a search algorithm, for example a random search algorithm. The random search algorithm randomly samples a certain number of connection patterns from the plurality of connections, and trains a model for each of the connection patterns. Then one model is chosen based on a performance measure (e.g. accuracy, F1, BLEU score, etc.) for a validation set. For instance, one or more connection patterns with high scores may be selected for runtime execution. In some cases, the selected connection patterns may be manipulated by making small modifications.

Additionally, or alternatively, in a soft type of connection, only a portion of the output of one layer is combined with the input of another layer. Specifically, the output of a layer softly connected to another layer is "weighted" before being added to the input of another layer. The weights of soft connection may vary for different soft connections.

In some other embodiments, the plurality of connections may correspond to soft connection patterns. In the case of the soft connection patterns, outputs of layers of the inner DNN are added to input of each layer of the outer DNN along with weights. In some example embodiments, these weights of the soft connection patterns may be associated with all connections or a subset of the connections between layers of the inner DNN and layers of the outer DNN. The weights may indicate strength of the connections between a given layer of the inner DNN and a given layer of the outer DNN. An output of the given layer of the inner DNN may be scaled by a factor that depends upon a set of connection weights prior to combination with the input of the given layer of the outer DNN. In some embodiments, during the training process of the multi-dimensional neural network, the connection weights are trained simultaneously with parameters of the DNNs. In such a manner, in contrast with the hard connections, the estimation of the soft connections or weights of the soft connections can be implemented as a process integrated with training neural networks. Hence, the process of establishing the soft connections is more aligned with the principles of neural networks.

For example, in some embodiments the multi-dimensional neural network is fully connected with soft connections. The full connection reflects the maximum connection pattern considered reasonable by a network designer. The nature of soft connections allows to let the training decide which connection is more important than the other.

For example, in some embodiments, the trained weights of the soft connections can be pruned by retaining only subsets of the connection based on values of the weights. For example, only connections with a weight above a threshold may be retained, or only the connection with the largest weight among all connections out of a given layer of the inner DNN may be retained, or only the connection with the largest weight among all connections into a given layer of the outer DNN may be retained. After the connections have been pruned, the network may be further trained using only the remaining connections, the weights of the remaining connections being simultaneously trained. In another embodiment, the remaining soft connections may be converted into hard connections, and the obtained network further trained.

In another embodiment, the multi-dimensional neural network includes one or multiple hidden DNNs in between the inner DNN and the outer DNN. The DNNs of the multi-dimensional neural network are connected into a forward direction from the inner DNN to the outer DNN. For instance, an input is propagated in forward direction from the inner DNN to the outer DNN. The propagation of the input in the forward direction prevents cycles or loops among the layers, while allowing a later layer of one DNN to be connected with an earlier layer of a subsequent DNN. Hence, addition of hidden DNNs in existing ANN provides a deep architecture, i.e. a multi-dimensional neural network without increasing number of parameters and without creating any cycles among the corresponding layers.

In one example embodiment, the multi-dimensional neural network forms a multi-pass transformer (MPT) architecture for an NLP application, such as a machine translation of languages. The MPT includes an inner network and an outer network. The inner network corresponds to the inner DNN of the multi-dimensional neural network and the outer network corresponds to the outer DNN of the multi-dimensional neural network. The outer network utilizes features from layers of the inner network by adding output from layers of the inner network to the original input of at least one of the layers of the outer network. In the MPT, same parameters of the inner network are shared to the outer network. As the same parameters are shared between the inner network and the outer network, there is no increase in the number of parameters. The MPT also performs feature refinement in an iterative manner, which improves performance for the machine translation significantly. Furthermore, the MPT may be combined with a self-attention network and a convolutional neural network or a feed-forward neural network for the machine translation. In some example embodiments, the MPT may be generated by performing a search (such as a heuristic based search) on a search space on the plurality of possible connection patterns. The heuristic based search may be performed using an evolutionary search algorithm.

In some example embodiments, the MPT may include connection weights that determine strength of the connection between layers of the inner network and layers of the outer network of the MPT. The connection weights may be learned together with the other neural network parameters. Additionally, or alternatively, the MPT model for the machine translation includes layers with a dual network or path consisting of a self-attention subnetwork and a feed-forward neural (FFN) subnetwork (e.g. a convolutional neural network). Such dual combination of the self-attention subnetwork and the FFN subnetwork can achieve better performance than a pure self-attention network.

Accordingly, one embodiment discloses a computer-based artificial intelligence (AI) system. The AI system comprises an input interface configured to accept input data; a memory configured to store a multi-dimensional neural network having a sequence of deep neural networks (DNN) including an inner DNN and an outer DNN; a processor configured to submit the input data to the multi-dimensional neural network to produce an output of the outer DNN and an output interface configured to render at least a function of the output of the outer DNN. In the multi-dimensional neural network, each DNN includes a sequence of layers and corresponding layers of different DNNs have identical parameters. Each DNN is configured to process the input data sequentially by the sequence of layers along a first dimension of data propagation. The DNNs in the sequence of DNNs are arranged along a second dimension of data propagation starting from the inner DNN till the outer DNN. The DNNs in the sequence of DNNs are connected, such that at least an output of an intermediate layer or a final layer of a DNN is combined with an input to at least one layer of the subsequent DNN in the sequence of DNNs. The multi-dimensional neural network receives the input data submitted by the processor to produce the output of the outer DNN.

Accordingly, another embodiment discloses a method for generating an output of a multi-dimensional neural network. The method includes accepting input data via an input interface. The method includes submitting the input data to the multi-dimensional neural network having a sequence of DNNs including an inner DNN and an outer DNN. Each DNN includes a sequence of layers and corresponding layers of different DNNs have identical parameters. Each DNN is configured to process the input data sequentially by the sequence of layers along a first dimension of data propagation. The DNNs in the sequence of DNNs are arranged along a second dimension of data propagation starting from the inner DNN till the outer DNN. The DNNs in the sequence of DNNs are connected, and at least one intermediate or final output of a DNN is combined with an input to at least one layer of the subsequent DNN in the sequence of DNNs. The method includes generating an output of the outer DNN. The method further includes rendering at least a function of the output of the outer DNN.

The presently disclosed embodiments will be further explained with reference to the attached drawings. The drawings shown are not necessarily to scale, with emphasis instead generally being placed upon illustrating the principles of the presently disclosed embodiments.

[Brief Description of Drawings]

[Fig. 1]

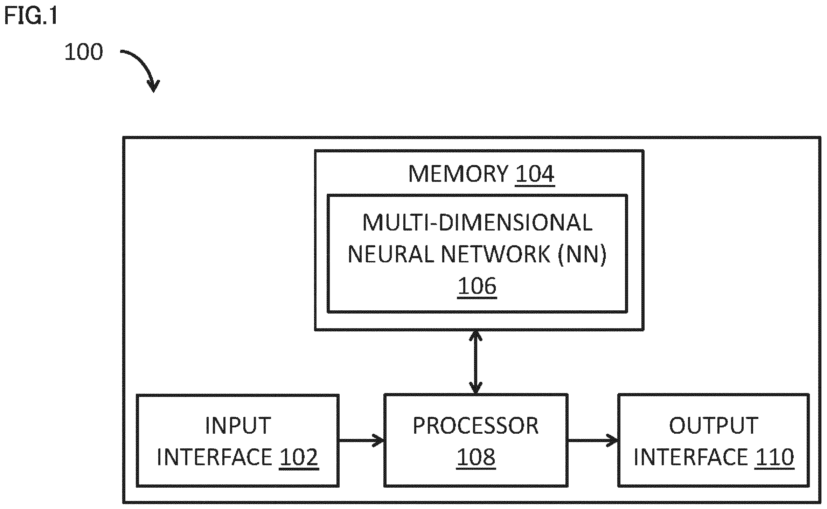

Figure 1 shows a principle block diagram of an artificial intelligence (AI) system, according to some embodiments of the present disclosure.
[Fig. 2A]

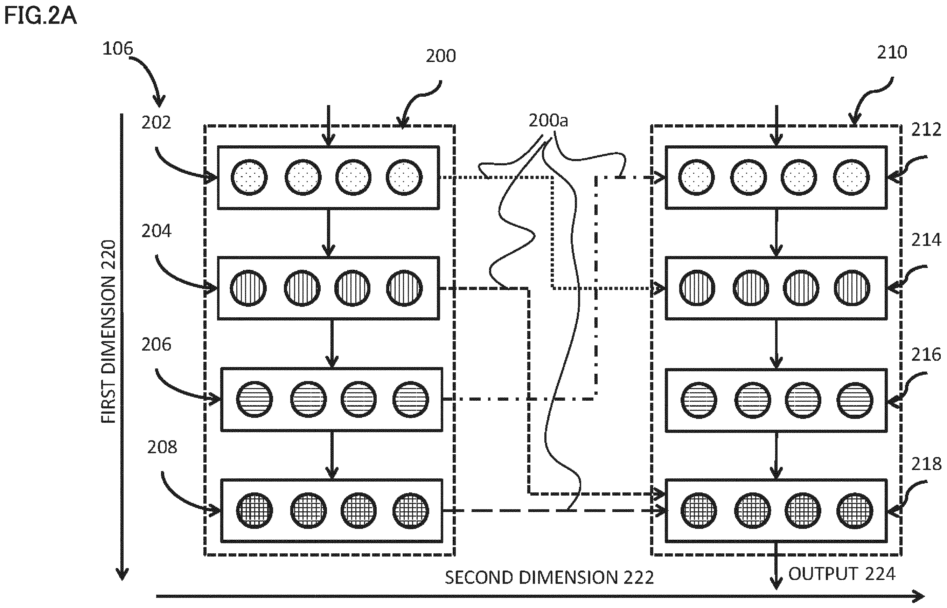

Figure 2A shows a block diagram of a multi-dimensional neural network stored in a memory of the AI system, according to one example embodiment of the present disclosure.
[Fig. 2B]

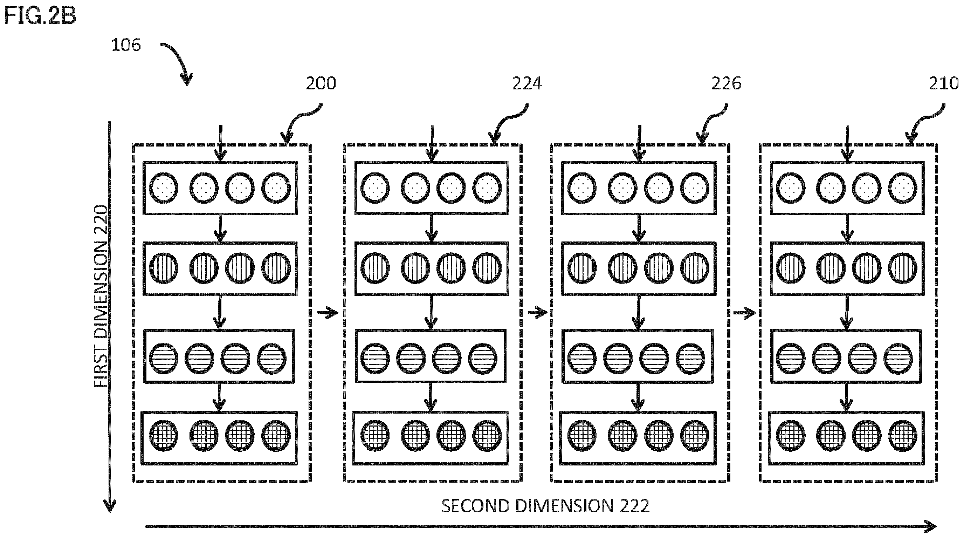

Figure 2B shows a block diagram of the multi-dimensional neural network stored in the memory of the AI system, according to another example embodiment of the present disclosure.
[Fig. 3]

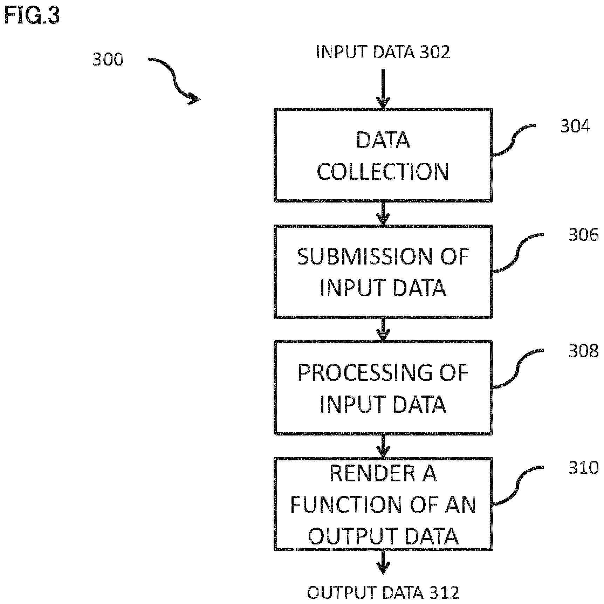

Figure 3 shows a processing pipeline of the AI system for generating an output of the multi-dimensional neural network, according to some embodiments of the present disclosure.
[Fig. 4A]

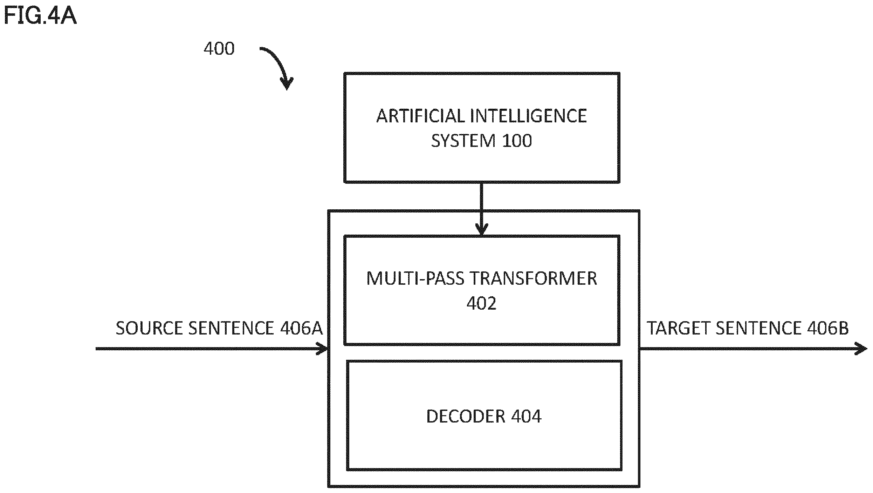

Figure 4A shows an exemplary schematic for an encoder formed by the multi-dimensional neural network, according to some example embodiments of the present disclosure.
[Fig. 4B]

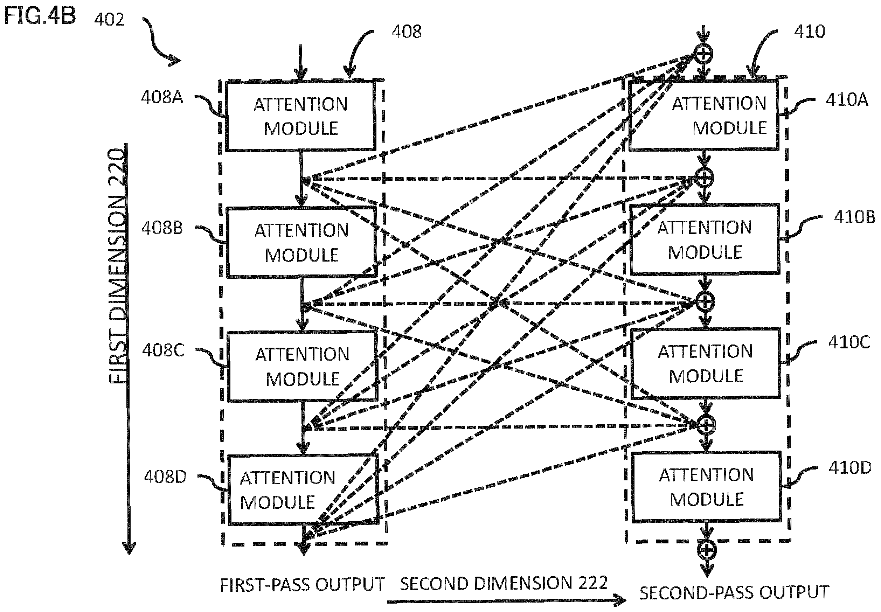

Figure 4B shows a block diagram of a multi-pass transformer (MPT) with hard connection patterns between layers of the inner network of the MPT and layers of outer network of the MPT according to one example embodiment of the present disclosure.
[Fig. 4C]

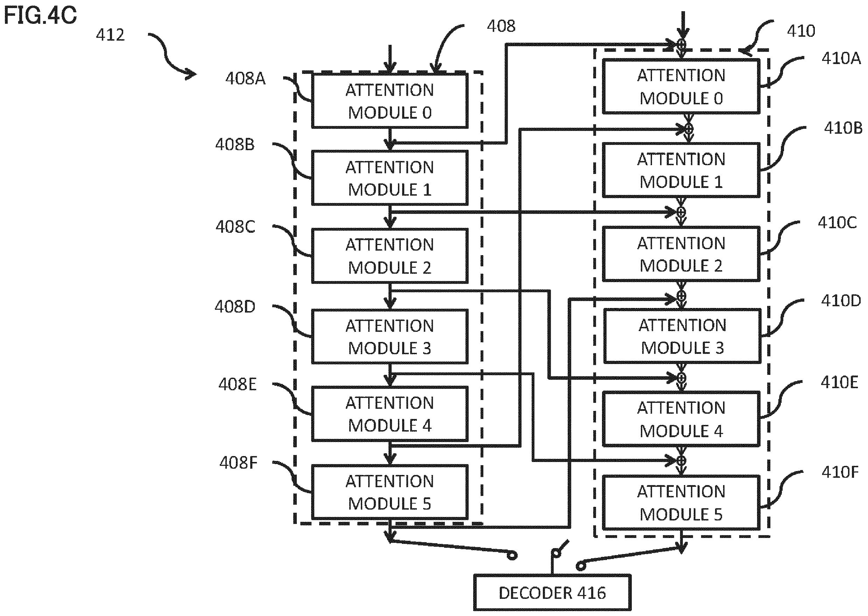

Figure 4C shows a block diagram of an MPT with searched hard connection pattern for a certain machine translation application, according to one example embodiment of the present disclosure.

[Fig. 4D]

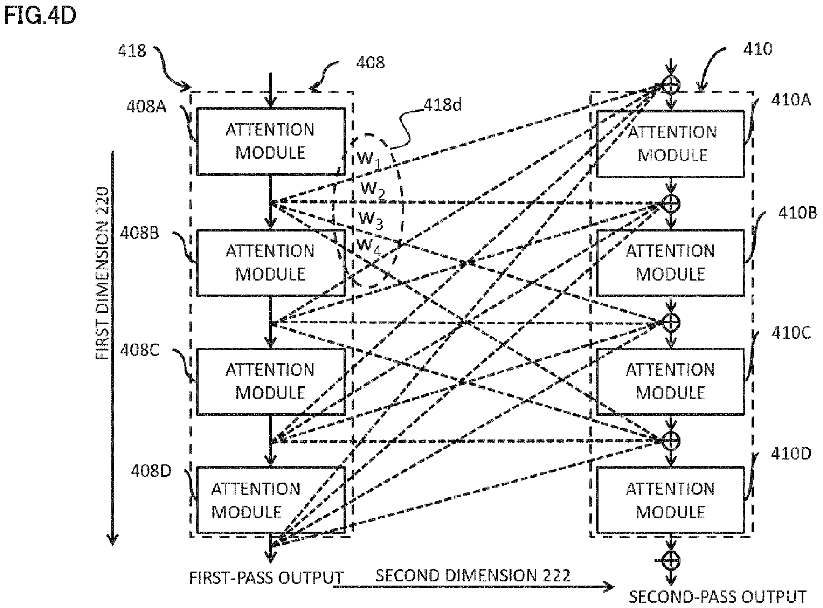

Figure 4D shows a block diagram of an MPT with weighted soft connection patterns between layers of the inner DNN and layers of the outer DNN according to another example embodiment of the present disclosure.
[Fig. 5]

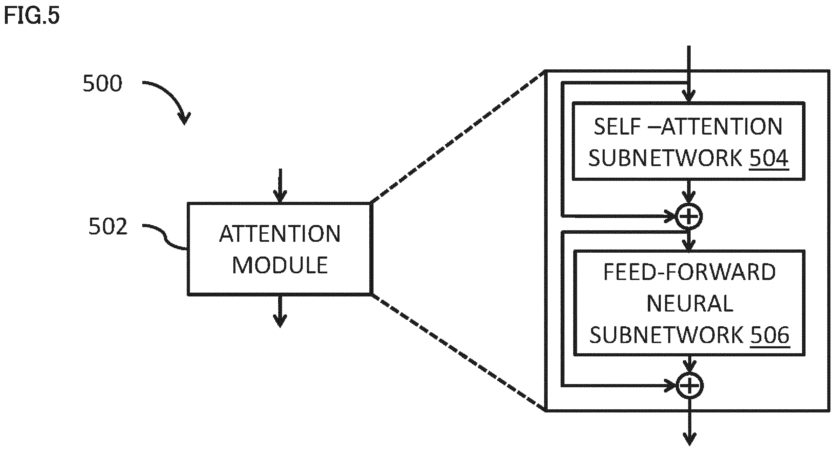

Figure 5 shows a block diagram of an attention module in each layer of each of the DNN in the multi-dimensional neural network, according to some embodiments of the present disclosure.
[Fig. 6A]

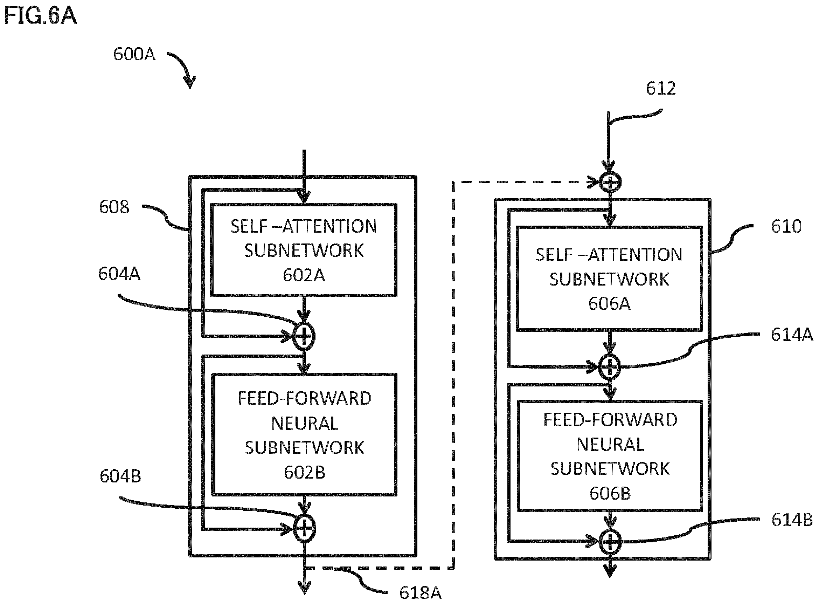

Figure 6A shows a block diagram of a connection pattern depicting a connection between two layers of two DNNs that combines a final output of a layer of a DNN with an input to a layer of subsequent DNN, according to one example embodiment of the present disclosure.
[Fig. 6B]

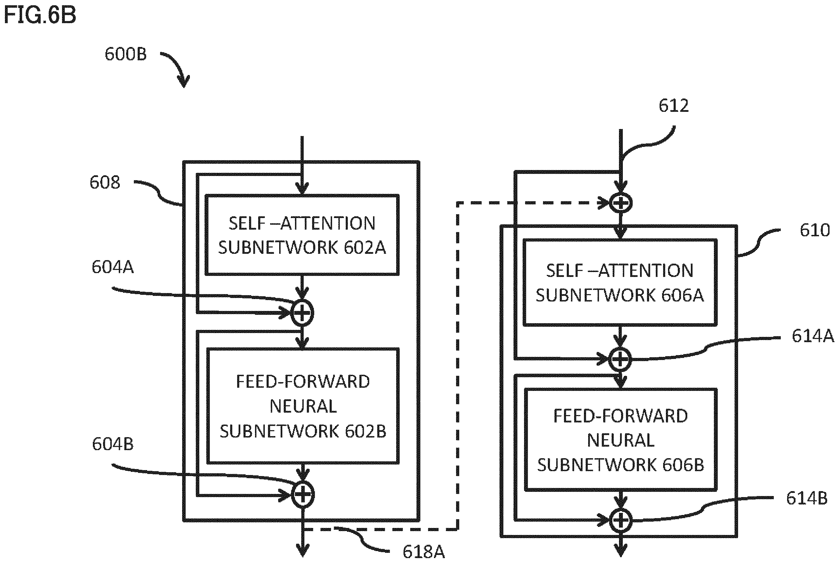

Figure 6B shows a block diagram of a connection pattern depicting a connection between two layers of two DNNs that combines a final output of a layer of a DNN with an input to a layer of subsequent DNN, according to another example embodiment of the present disclosure.
[Fig. 6C]

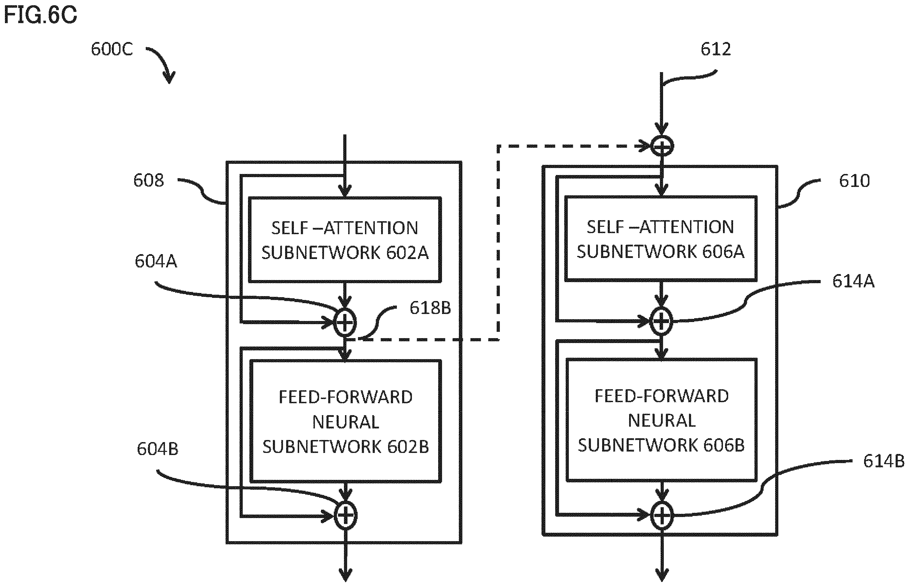

Figure 6C shows a block diagram of a connection pattern depicting a connection between two layers of two DNNs that combines an intermediate output of a layer of a DNN with an input to a layer of subsequent DNN, according to another example embodiment of the present disclosure.
[Fig. 6D]

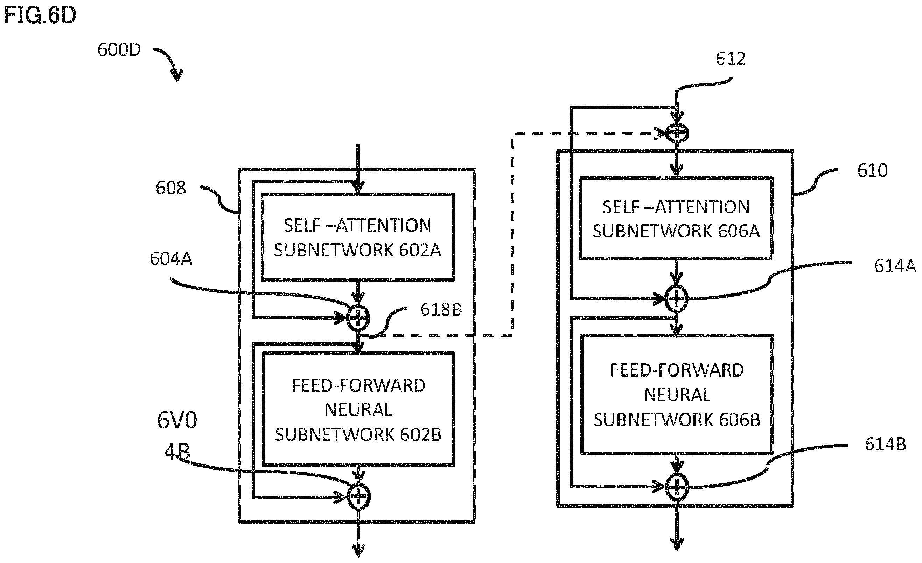

Figure 6D shows a block diagram of a connection pattern depicting a connection between two layers of two DNNs that combines an intermediate output of a layer of a DNN with an input to a layer of subsequent DNN, according to some embodiments of the present disclosure.
[Fig. 7]

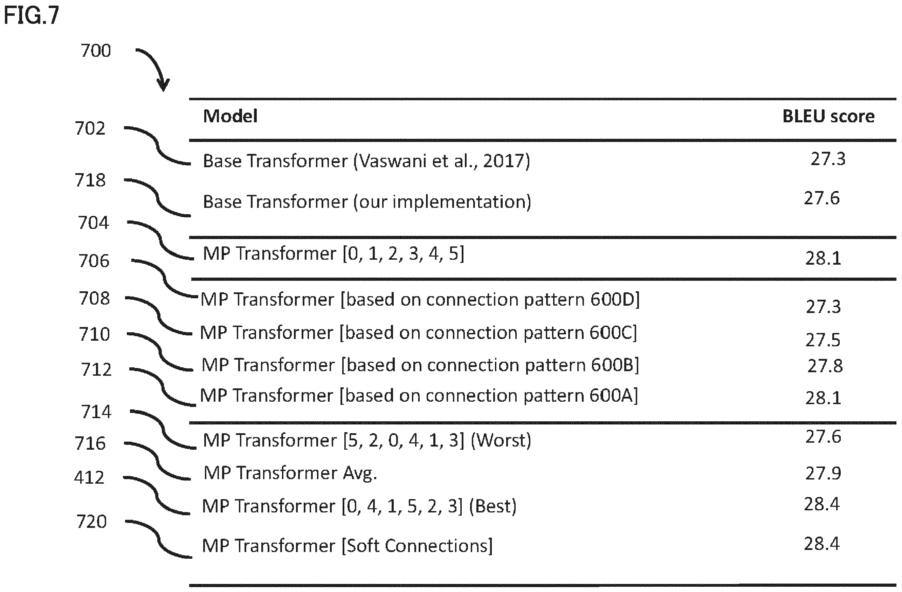

Figure 7 shows a table of an ablation study of the encoder corresponding to the MPT architecture, according to one example embodiment of the present disclosure.
[Fig. 8A]

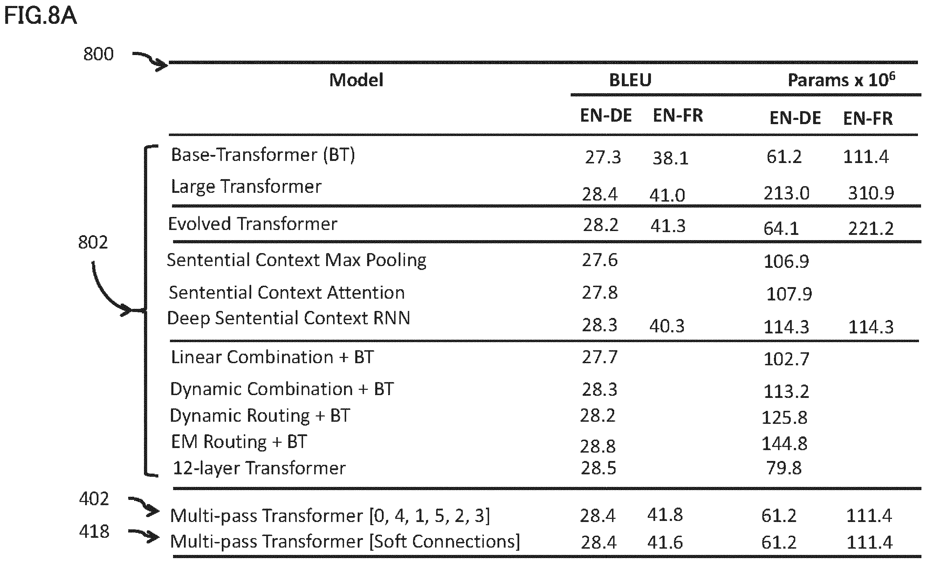

Figure 8A shows a table of a comparison of the MPT with state-of-art methods, according to one example embodiment of the present disclosure.
[Fig. 8B]

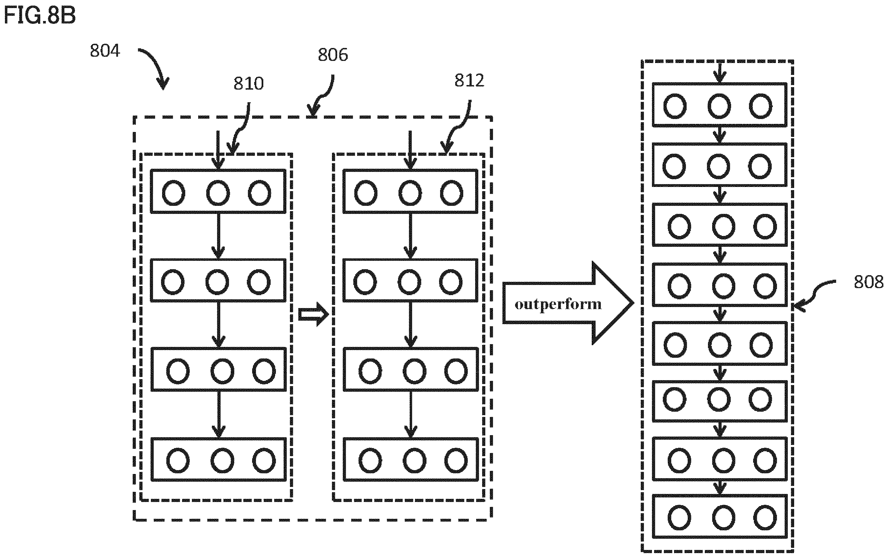

Figure 8B shows an illustration of advantages of a multi-pass transformer equipped with the multi-dimensional neural network according to some embodiments of present disclosure.
[Fig. 9]

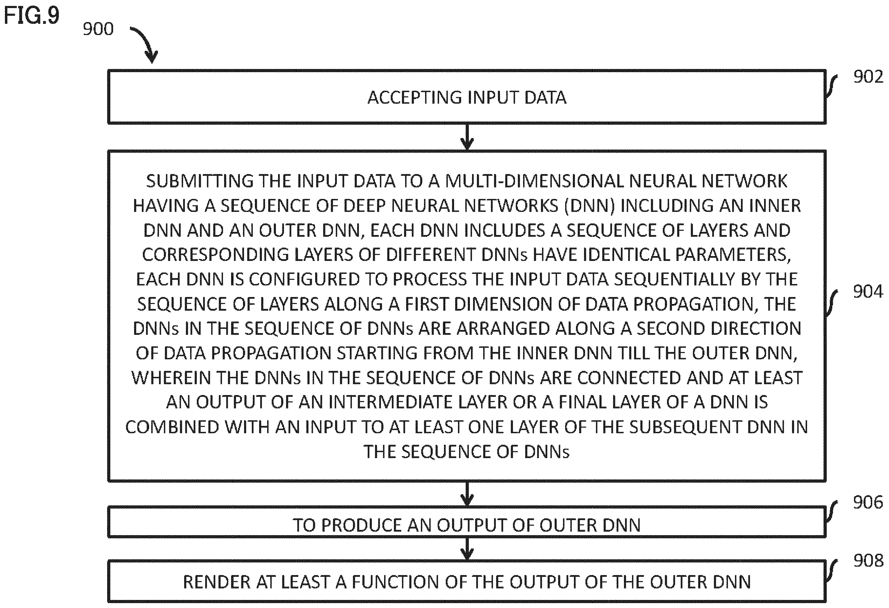

Figure 9 shows a method flow diagram for generating an output of the multi-dimensional neural network, according to some embodiments of the present disclosure.
[Fig. 10]

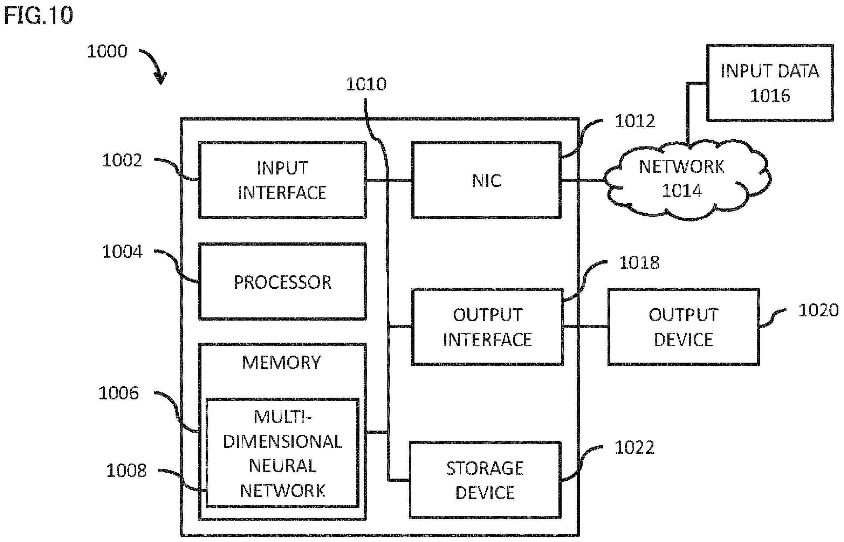

Figure 10 shows a block diagram of an AI system, according to some embodiments of the present disclosure.
[Fig. 11A]

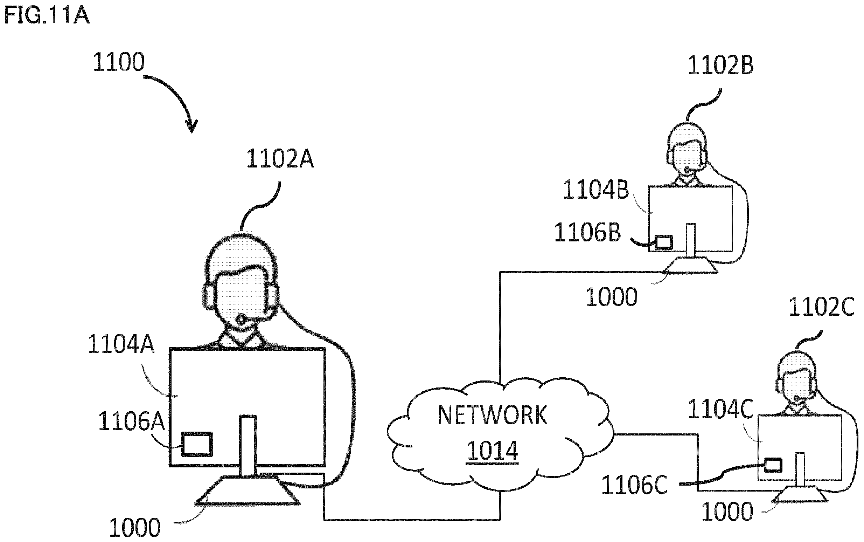

Figure 11A shows an environment for machine translation application, according to some embodiments of the present disclosure.
[Fig. 11B]

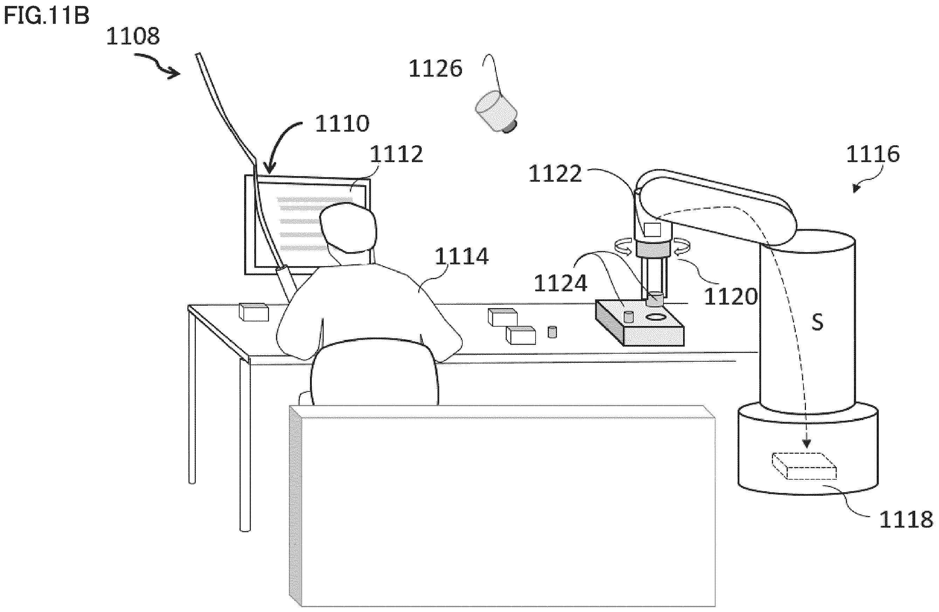

Figure 11B shows a representation of a cooperative operation system using the machine translation application, according to some embodiments of the present disclosure.

[Description of Embodiments]

In the following description, for purposes of explanation, numerous specific details are set forth in order to provide a thorough understanding of the present disclosure. It will be apparent, however, to one skilled in the art that the present disclosure may be practiced without these specific details. In other instances, apparatuses and methods are shown in block diagram form only in order to avoid obscuring the present disclosure.

As used in this specification and claims, the terms "for example," "for instance," and "such as," and the verbs "comprising," "having," "including," and their other verb forms, when used in conjunction with a listing of one or more components or other items, are each to be construed as open ended, meaning that the listing is not to be considered as excluding other, additional components or items. The term "based on" means at least partially based on. Further, it is to be understood that the phraseology and terminology employed herein are for the purpose of the description and should not be regarded as limiting. Any heading utilized within this description is for convenience only and has no legal or limiting effect.

**Overview**

In recent years, architecture or structure of neural networks has evolved from recurrent neural network (RNN) to long-short-term memory (LSTM), convolutional neural network (CNN) with convolutional sequential architecture and transformer. Generally, the convolutional sequential architecture and the transformer are popularly used for Natural Language Processing, such as language representation learning. For computer vision application, a neural architecture of a neural network corresponds to a multi-path approach for efficient information flow in layers of the neural network. For the NLP application, the neural architecture corresponds to a sequential based neural architecture. The sequential based neural architecture utilizes features from last layer (i.e. output layer) of the neural network, which provides a limited information flow. Some embodiments are based on a realization to gain insights from the multi-path based neural architecture.

Specifically, some embodiments are based on understanding of advantages of sharing information among layers of DNN in both directions of data propagation. For example, while outputs from previous layers of the DNN can be added to the input of other adjacent and non-adjacent layers of DNN, it can also be beneficial to have outputs computed at later layers to help better process the input data or intermediate outputs from earlier layers. In such a manner, the data can be exchanged in both directions to add additional flexibility on data processing. However, propagating data in both directions may create logical loops jeopardizing training and execution of DNNs.

Some embodiments are based on realization that this loop problem may be addressed by rolling out DNN in a direction different from a direction of data propagation by cloning or duplicating parameters of DNN. For example, some embodiments are based on realization that a sequence of hidden layers that sequentially processes an input can provide insightful information for another parallel sequence of hidden DNN layers that also processes sequentially the same input.

To that end, some exemplar embodiments disclose a multi-stage fusion mechanism that combines residual connections and dense connections is applied for obtaining a robust neural architecture for the applications, such as the NLP application, the computer vision application, or combination thereof. The residual connections enable skipping connection of a feature of a layer of a neural network to other non-adjacent layers of the neural network. The dense connections enable all possible connection between layers of a neural network. The residual connections and the multi-stage connections are implemented based on operations, such as concatenation, addition and recurrent fusion. The residual connections and the dense connections enable combination of information of features from lower layers and higher layers of the neural network in an efficient manner. More specifically, the residual connections allow gradients (or vectors) to flow through a neural network without passing through non-linear activation functions between layers of the neural network. In this manner, the residual connection enables skipping one or more layers of the neural network. This prevents problem of vanishing gradient in the neural network. The prevention of the vanishing gradient problem improves training process of the neural network.

A few examples of application of the multi-stage fusion include object detection, machine translation, and/or the like. However, such model lacks to capture multi-stage information due to the limited capacity of the concatenation, addition, and recurrent fusion operations.

Some embodiments are based on a realization to determine an optimal structure for constructing parameter models (e.g. image models for computer vision application or language models for NLP application). To that end, the optimal structure is determined based on a neural architecture search (NAS) algorithm. Additionally, or alternatively, reinforcement learning and evolutionary algorithm based learning may be used in the neural architecture search. Some embodiments randomly sample output (e.g. output feature) from different layers of the neural network during a training stage to determine the optimal structure. This results in training multiple architectures at a time and provides a form of regularization for preventing overfitting of features or parameters in the neural network. By using the output feature from the inner network of the optimal neural architecture, a parameter model (i.e. the optimal structure) is obtained. Such parameter model may be obtained with lower computational cost as the multiple architectures are trained at a same time.

Figure 1 shows a principle block diagram of an artificial intelligence (AI) system 100, according to some embodiments of the present disclosure. The AI system 100 includes an input interface 102, a memory 104 storing a multi-dimensional neural network 106, a processor 108, and an output interface 110. The multi-dimensional neural network 106 has a sequence of deep neural networks (DNNs) including an inner DNN and an outer DNN. Each DNN includes a sequence of layers and corresponding layer of different DNNs have identical parameters. That is, the inner DNN shares identical parameters to the outer DNN. The identical parameters are shared through different layers (or paths) between the inner DNN and the outer DNN. The sharing of the identical parameters prevents increase in number of the parameters as well as provides regularization on parameters of the multi-dimensional neural network 106. The regularization of parameters prevents overfitting the parameters. Each DNN is configured to process the input data sequentially by the sequence of layers along a first dimension of data propagation. The DNNs in the sequence of DNNs are arranged along a second dimension of data propagation starting from the inner DNN till the outer DNN. The DNNs in the sequence of DNNs are connected, such that at least one intermediate output of a layer of a DNN is combined with an input to at least one layer of the subsequent DNN in the sequence of DNNs. In one example embodiment, each of the DNNs in the multi-dimensional neural network 106 includes attention modules. Each of the attention modules includes a self-attention subnetwork and a feed-forward subnetwork and further includes a residual connection around the self-attention subnetwork and a residual connection around the feed-forward subnetwork.

The processor 108 is configured to submit the input data to the multi-dimensional neural network 106 to produce an output of the outer DNN. In some embodiments, the processor 108 is configured to randomly sample output from different layers of the multi-dimensional neural network 106 during training stage. This results in training multiple architectures for different applications at a time and improves efficiency in processing time of the AI system 100. In some embodiments, the processor 108 is configured to establish connection between one or more pairs of a layer of a DNN and a layer of a subsequent DNN of the multi-dimensional neural network based on a plurality of connections. The connections can have different patterns and different types. The different patterns of connections connect different layers of neighboring DNNs. The different types of connection include hard connections and soft connection, as described below.

The output interface 110 is configured to render at least a function of the output of the outer DNN. For instance, the function of the output corresponds to parameter model for applications, such as NLP application, computer vision application or a combination thereof. More specifically, the function may be another DNN that accepts the output of the outer DNN and outputs a class label for classification tasks such as optical character recognition, object recognition, and speaker recognition. Moreover, the function may be a decoder network that accepts the output of the outer DNN and generates a sequence of words for sentence generation tasks such as speech recognition, machine translation, and image captioning.

Figure 2A shows a block diagram of the multi-dimensional neural network 106 stored in the memory 104 of the AI system 100, according to one example embodiment of the present disclosure. In an embodiment, the multi-dimensional neural network 106 includes an inner DNN 200 and an outer DNN 210. The inner DNN 200 includes a sequence of layers, such as an input layer 202 and an output layer 208, with one or more intermediate or hidden layers, such as a hidden layer 204 and a hidden layer 206 in between the input layer 202 and the output layer 208. In a similar manner, the outer DNN 210 includes a sequence of layers, such as an input layer 212 and an output layer 218, with one or more hidden layers, such as a hidden layer 214, a hidden layer 216 in between the input layer 212 and the output layer 218.

The DNNs 200 and 210 include corresponding layers, i.e., the layers having the same parameters. For example, the layer 202 corresponds to the layer 212, the layer 204 corresponds to the layers 214, the layer 206 corresponds to the layers 216, and the layer 208 corresponds to the layers 218. The corresponding layers are arranged in the same order making at least some portions of the structure of DNNs 200 and 210 identical to each other. In such a manner, the variation of parameters of the multi-dimensional neural network 106 is reduced, which increases flexibility of its structure.

The inner DNN 200 is configured to process input data sequentially by the layers i.e. the DNN layer 202, the DNN layer 204, the DNN layer 206 along a first dimension 220 of data propagation. In a similar manner, the outer DNN 210 is configured to process input data sequentially by the layers i.e. the DNN layer 212, the DNN layer 214, the DNN layer 216 along the first dimension 220 of data propagation. The inner DNN 200 and the outer DNN 210 are arranged along a second dimension 222 of data propagation.

The layers (i.e. the input layer 202, the hidden layers 204 and 206, and the output layer 208) of the inner DNN 200 are connected to the layers (i.e. the input layer 212, the hidden layers 214 and 216, and the output layer 218) of the outer DNN 210 on an input/output level. In one example embodiment, the layers of the inner DNN 200 have a plurality of connections with the layers (i.e., the input layer 212, the hidden layers 214 and 216, and the output layer 218) of the outer DNN 210. This plurality of connections herein corresponds to a plurality of hard connections arranged in a pattern 200a (hereinafter referred to as hard connection patterns), as shown in Figure 2A. For instance, an output of an intermediate layer of the inner DNN 200 (such as the hidden layer 204 or the hidden layer 206) is added with an input to a layer of the outer DNN 210 (such as the hidden layer 214 or the hidden layer 216). In some example embodiments, output of one of the layers of the inner DNN 200 is added as input to any other layers of the inner DNN 200, via a residual connection.

Different embodiments may use different connection patterns 200a to adapt the multi-dimensional neural network for different applications. For example, in some embodiments, the output of a given layer of the inner DNN may only contribute to the input of a unique layer of the outer DNN. In some embodiments, outputs of two given layers in the inner DNN may contribute to the input of the same layer of the outer DNN. For example, all layers of the inner DNN can be connected to all layers of the outer DNN. Such a connection pattern is referred herein as full connection, making the multi-dimensional neural network being fully connected. Alternatively, the multi-dimensional neural network can be partially connected. For example, in a partially connected multi-dimensional neural network, one or more layers of the inner DNN can be connected to multiple layers of the outer DNN. Additionally, or alternatively, in a partially connected multi-dimensional neural network, multiple layers of the inner DNN can be connected to a layer of the outer DNN.

In addition to different patterns of the connections between layers of different DNNs in the multi-dimensional neural network, some embodiments use the connections of different types. For example, various embodiments use hard connections, soft connections or combinations thereof. For example, in a hard connection, outputs of layers of the inner DNN are added to inputs of layers of the outer DNN in its entirety. That is, the layers are either connected or not. If the layers are connected, the output of one layer is combined with the input of another layer without additional scaling and/or weight multiplication. If the layers are not connected, nothing from the output of the layer is added to the input of the other layer. The pattern 200a shows an exemplar pattern of hard connections.

Hence, according to the principles of hard connection, the output of a layer of the inner DNN may either contribute to the input of a layer of the outer DNN or may not contribute to the input of that layer of the outer DNN. The principle of data propagation according to hard connections differs from principles of the propagation between layers of a single DNN. Thus, the hard connections allow to decouple principles of data propagations in different directions. In turn, such a decoupling allows to search for a better pattern of hard connections on top of training the parameters of DNNs, which adds additional flexibility into the architecture of multi-dimensional neural network.

In some embodiments, during the training process of the multi-dimensional neural network, the pattern of hard connections is selected among a plurality of patterns of connections. For each selected connection pattern, corresponding multi-dimensional neural network is trained. The trained multi-dimensional network that gives best performance is selected among all trained multi-dimensional networks. More specifically, the hard connection patterns are selected based on a search algorithm, for example a random search algorithm. The random search algorithm randomly samples a certain number of connection patterns from the plurality of connections, and trains a model for each of the connection patterns. Then one model is chosen based on a performance measure (e.g. accuracy, F1, BLEU score, etc.) for a validation set.

In some embodiments, new connection patterns may be selected for including in the search algorithm. The pre-determined connection patterns may be identified based on scores associated with each of the pre-determined connection patterns. For instance, one or more pre-determined connection patterns with high scores may be selected as the new connection patterns. In some cases, the selected pre-determined connection patterns may be manipulated by making small modifications.

Additionally, or alternatively, in a soft type of connection, only a portion of the output of one layer is combined with the input of another layer. Specifically, the output of a layer softly connected to another layer is "weighted" before being added to the input of another layer. The weights of soft connection may vary for different soft connections.

In one example embodiment, the residual connection allows skipping of the connection of one layer of the inner DNN 200 to other non-adjacent layers of the inner DNN 200. For instance, output of the input layer 202 can be added as input to the hidden layer 206 by skipping the hidden layer 204 based on the residual connection. In some example embodiments, the output of the input layer 202 triggers an activation function in case of the addition of the output of the input layer 202 as the input to the hidden layer 206. Such an activation function may be a rectified linear activation unit (ReLu) that transforms any non-linearity in the output of the input layer 202. Further, in some example embodiments, the layers 202-208 of the inner DNN 200 and corresponding layers 212-218 of the outer DNN 210 share identical parameters (e.g. weight values or feature vectors). The layers 212-218 of outer DNN 210 computes the data input to provide an output 224.

In another embodiment, the multi-dimensional neural network 106 may have one or multiple hidden DNNs between the inner DNN 200 and the outer DNN 210, as shown in Figure 2B.

Figure 2B shows a block diagram of the multi-dimensional neural network 106 stored in the memory 104 of the AI system 100, according to another example embodiment of the present disclosure. The multi-dimensional neural network 106 includes one or multiple hidden DNNs, e.g. a hidden DNN 224 and a hidden DNN 226 in between the inner DNN 200 and the outer DNN 210. As shown in Figure 2B, each of the hidden DNNs processes input data (e.g. the input data 302 in Figure. 3) sequentially along the first dimension 220 of data propagation. The outer DNN 200, the hidden DNN 224, the hidden DNN 226 and the outer DNN 210 are arranged along the second dimension 222 of data propagation starting from the inner DNN 200 till the outer DNN 210.

The hidden DNNs of the multi-dimensional neural network 106, i.e. the hidden DNNs 224 and 226 are connected into a forward direction (i.e. along the second dimension 222). The connection between hidden DNNs (e.g. the DNNs 224 and 226) along the second dimension 222 prevents loop connections or cyclic connections among the layers in the multi-dimensional neural network 106. Moreover, the connection along the second dimension 222 may increase number of the hidden DNNs in between the inner DNN 200 and the outer DNN 210 for providing accurate output. The increase in the number of hidden DNNs (i.e. the hidden DNNs 224 and 226) does not increase number of parameters as identical parameters are shared between the inner DNN 200, the hidden DNNs 224 and 226, and the outer DNN 210.

In one example embodiment, the inner DNN 200 provides output to any other DNNs, such as the hidden DNN 226 via a residual connection. The residual connection allows skipping one or more hidden DNNs (e.g. the hidden DNN 224) and adding the output of a layer of the inner DNN 200 to a layer of the hidden DNN 226. For instance, output of the inner DNN 200 can be added as input to the hidden DNN 226 by skipping the hidden DNN 224 based on the residual connection.

Figure 3 shows a processing pipeline 300 of the AI system 100 for generating an output of the multi-dimensional neural network 106, according to some embodiments of the present disclosure. Initially, input data 302 is provided to the AI system 100 via the input interface 102. In some cases, the input data 302 may include a training dataset for training the multi-dimensional neural network 106. Moreover, the input data 302 may vary depending on type of application. For example, the input data 302 may include image data or video data for image processing or computer vision applications. For NLP applications, the input data 302 may correspond to a speech data or a textual data. The processing pipeline 300 includes operations 304-310 performed by the AI system 100.

At operation 304, the input data 302 is obtained by the processor 108 from the input interface 102. At operation 306, the processor 108 submits the input data 302 to the multi-dimensional neural network 106. At operation 308, the multi-dimensional neural network 106 processes the input data 302. In some embodiments, the multi-dimensional neural network 106 processes the input data 302 for providing output of one of the DNNs 200, 224, 226, and 210 as input to a subsequent DNN of the DNNs 200, 224, 226, and 210. In some example embodiments, the input data 302 may be processed using pre-determined connection patterns. In some cases, the pre-determined connection patterns may correspond to hard connection patterns optimized during a random search at the training process of the multi-dimensional neural network 106. In some other cases, the pre-determined connection patterns may correspond to soft connection patterns learned simultaneously with parameters of the multi-dimensional neural network 106 during the training process of the multi-dimensional neural network 106. At operation 310, the multi-dimensional neural network 106 renders a function of an output of the outer DNN 210. The output is provided as output data 312 via the output interface 110. In some example embodiments, the function of the output of the outer DNN 210 includes encoded form of the input data to be produced as the output of the AI system 100 via the output interface 110. Further, the produced output may be displayed through graphical representation or visualization via the output interface. In one example embodiment, the input data may be processed by a decoder and produce the decoded data as the output.

**Exemplary embodiments**

Figure 4A shows an exemplary schematic 400 of an encoder in the multi-dimensional neural network 106, according to some example embodiments of the present disclosure. In some embodiments, the multi-dimensional neural network 106 forms the encoder 402 in encoder-decoder architecture of a neural network, such as a neural network for machine translation of a language into another language. In an illustrative example scenario, the AI system 100 trains the multi-dimensional neural network 106 for the machine translation. For instance, the multi-dimensional neural network 106 is trained using a training dataset. The training dataset corresponds to a language pair, such as an English-German language pair, or English-French language pair. The training dataset may include a plurality of sentence pairs, such as 4.5 million sentence pairs. During the training process, the multi-dimensional neural network 106 generates a dictionary of tokens (e.g. 32,000 tokens) based on a byte-pair encoding (BPE) algorithm. The multi-dimensional neural network 106 samples sentences with approximately same length into groups or batches.

Additionally, or alternatively, the AI system 100 may determine an optimal connection pattern from the plurality of connections. In some embodiments where the connection patterns are hard connection patterns, the optimal connection pattern may be determined based on a random search algorithm. The random search algorithm selects a certain number of connection patterns randomly from the plurality of connections. A model is chosen based on a performance measure for validation data prepared for a target application. For instance, the performance measure may be recognition of accuracy for classification applications and F1 or BLEU score for machine translation applications.

Figure 4B shows a block diagram of a multi-pass transformer (MPT) 402 with a hard or soft connection pattern between layers of the inner network of the MPT and layers of outer network of the MPT according to one example embodiment of the present disclosure. In this exemplar MPT, the layers of the multi-dimensional neural network 106 are formed by sub-networks having an attention module architecture. The MPT 402 is fully connected, i.e., outputs of all attention modules of DNN 408 are added to inputs of all attention modules of DNN 410.

The connection pattern of MPT 402 can be formed by hard and/or soft connections. The determination of optimal connection pattern in the hard connection patterns is explained further with reference to Figure 4C. In some embodiments where the connection are soft connections, the optimal connection pattern may be determined by optimizing the weights of the soft connections simultaneously with the other parameters of the neural network. The determination of optimal soft connection pattern in the soft connection patterns is explained further with reference to Figure 4D.

In some implementations, the MPT 402 forms an encoder for the machine translation. The MPT 402 includes the inner network and an outer network. The inner network corresponds to the inner DNN 200 and the outer network corresponds to the outer DNN 210. Similar to sharing of identical parameters between the inner DNN 200 and the outer DNN 210, same parameters are shared between the inner network and the outer network. The output of one of the layers of the inner network is added via a residual connection that allows adding the output to the input of one of the layers of the outer network in the MPT 402. Further, in some embodiments, in the training process, the MPT 402 may randomly sample features to be used for applications, such as the machine translation from last layer (i.e. output layer) in either the inner network or the outer network. In some embodiments, the MPT 402 may use the output of the outer DNN 210 for applications, such as machine translation application.

For the machine translation, a source sentence 406A (e.g. English sentence) is provided as input data (e.g. the input data 302) to the MPT 402 via the input interface 102. For instance, the source sentence may be provided as a speech input, a textual input or combination thereof. The MPT 402 translates the source sentence 406A to a target sentence 406B (e.g. German sentence). In one example embodiment, the input interface 102 tokenizes an input sentence to form source sentence 406A, which is sent to layer 202 of the inner DNN 200 and the layer 212 of the outer DNN 210. The input sentence may be tokenized based on byte-pair encoding (BPE) and further transformed by a word embedding layer into a vector representation. The vector representation may include L C-dimensional vectors, where L corresponds to a sentence length, i.e., the number of tokens in the sentence, and C corresponds to a word embedding dimension. Further, the position of each word of the source sentence 406A is encoded into a position embedding space and added to the vector representation, forming the final source sentence sequence 406A used as input to the MPT 402. The MPT 402 then computes encodings from the input, wherein the encodings are obtained as the output 224 of the layer 218 of the outer DNN 210. In one embodiment, the encodings computed by the MPT 402 are provided to the decoder 404. The decoder 404 computes a target sentence 406B from the encodings and provides the target sentence as output via the output interface 110. The target sentence 406B may be provided as a speech output, a textual output or a combination thereof.

Figure 4B shows a block diagram of the MPT 402 with hard connection patterns between layers of an inner network 408 (e.g., the inner DNN 200) and layers of an outer network 410 (e.g., the outer DNN 210) for the machine translation application, according to one example embodiment of the present disclosure. The inner network 408 replicates the outer network 410 for sharing the same parameters. For instance, the inner network 408 shares same weights with the outer network 410. The inner network 408 and the outer network 410 correspond to a DNN as described above in description with reference to Figure 1 and Figure 2A. Each of the networks 408 and 410 includes layers of attention modules that are sequentially connected along a dimension, such as the first dimension 220. For instance, the inner network 408 includes sequentially connected attention module 408A, attention module 408B, attention module 408C and attention module 408D. In a similar manner, the outer network 410 includes sequentially connected attention module 410A, attention module 410B, attention module 410C and attention module 410D. Further, an output of the inner network 408 is propagated along a forward direction, such as the second dimension 222. The output of each of the attention modules 408A-408D of the inner network 408 is provided as input into each of the attention modules 410A-410D of the outer network 410. The output of each of the attention modules 408A-408D is added along with original input of each attention modules 410A-410D. The overall output of the inner network 408 is provided as first-pass output and overall output of the outer network 410 is provided as second-pass output.

As shown in Figure 4B, each output of the attention modules 408A-408D is added to the attention modules 410A-410D through a plurality of connections. This enables refinement of the features in an iterative manner without increasing the number of parameters, which improves performance of the MPT 402. In some embodiments, the MPT 402 may be trained for machine translation using only the output of the outer network 410. In some other embodiments, by training for the machine translation using either output of the inner network 408 or output of the outer network 410, two network models, i.e. the inner network 408 and the outer network 410 are trained in one training session. This allows to dynamically choose a parameter model for various applications depending on computational requirements. In one case, the computational requirements may be manually determined to choose the parameter model. In some other case, the computational requirements may be automatically determined to choose the parameter model in an automated manner.

Figure 4C shows a block diagram of a best model 412 for the MPT 402 with a partially connected pattern of hard connections selected for a certain machine translation application, according to one example embodiment of the present disclosure. The best model 412 corresponds to an optimal connection pattern determined from a fully connection search space based on random neural architecture search algorithm. The neural architecture search is based on a random search algorithm. In an example scenario, a connection search space with all the connection patterns is considered in which output of one layer in the inner network 408 is added to input of one layer in the outer network 410, with the constraint that no two outputs can be added to the same input. This reduces the search space to a set of permutations on $\{0,...,N-1\}$, where N denotes the number of layers in the inner network 408, resulting in a search space of size N!. Without the constraint, the search space is exponentially large by $N^N$.

An $i^{th}$ hard MPT architecture may be denoted using a sequence of indices corresponding to the image

$$\left[\tau_0^{(i)}, \ldots, \tau_N^{(i)}\right]$$

of the sequence [0, ... , N] via an associated $i^{th}$ permutation. In the $i^{th}$ hard MPT architecture,

$$\tau_k^{(i)}$$

output of a layer in the inner network 408 is added to input of $k^{th}$ attention module in the outer network 410. For example, for the inner network 408 with N hard = 6 attention modules 408A-408F, the best model 412 for the MPT 402 is obtained with connection pattern [0, 4, 1, 5, 2, 3], in which the output of the $0^{th}$ inner layer is added to the input of the $0^{th}$ outer layer, the output of the $4^{th}$ inner layer is added to the input of the $1^{st}$ outer layer, the output of the $1^{st}$ inner layer is added to the input of the $2^{nd}$ outer layer, etc. A connection pattern [0, 1, 2, 3, 4, 5] denotes a default architecture of the MPT 402 during a setup.

The output of one or more of the attention modules 408A-408F of the inner network 408 are combined with input to one of the attention modules 410A-410F of the outer network 410. For example, input of the attention module 410A is combined with output of the attention module 408A. The connections between the attention modules 408A-408F and the attention modules 410A-410F may be configured from any output of an intermediate layer or output layer of the inner network 408 to any input of an input layer or intermediate layer of the outer network 410.

Figure 4D shows a block diagram of the MPT 418 according to some other example embodiments of the present disclosure. In some example embodiments, the MPT 418 utilizes soft connections that use weights to scale outputs of the inner network 408 before adding the scaled outputs to the connected layers of the outer network 410. For instance, the attention module 408A may be connected to each of the attention modules 410A-410D of the outer network 410 with weights 418d $w_1$, $w_2$, $w_3$ and $w_4$. In an illustrative example scenario, the weight $w_1$, e.g. 0.2 may be used to scale the input to the attention module 410A, the weight $w_2$, e.g. 0.4 may be used to scale the input to the attention module 410B, the weight $w_3$, e.g. 0.6 may be used to scale the input to the attention module 410C and the weight $w_4$, e.g. 0.8 may be used to scale the input to the attention module 410D.

Different embodiments can use the weights 418b in direct or indirect manner. For example, in one embodiment, each soft connection has an associated weight, and the embodiment directly uses that weight to scale the contribution of the inner layer into the corresponding outer layer. Hence, the weight of each soft connection represents its strength. In alternative embodiment, the weight $w_{kj}$ of each soft connection between a layer j of the inner DNN and a layer k of the outer DNN is not used directly to determine the strength of the connection, but instead fed to a function such as a softmax function, such that the strength of each connection depends on the weights for other connections.

In some cases, the MPT 418 is fully connected with soft connections. The weights are learned during the training process for the residual connection between each layer pair between the attention modules 408A-408D and the attention modules 410A-410D. For example, the output of the $k^{th}$ attention module in the outer network 410 denoted by $\bar{S}_k^{out}$ may be computed as,

$$\bar{S}_k^{out} = AttModule \left(\bar{S}_{k-1}^{out} + \sum_{j=0}^{N-1} \alpha_{kj} \, S_j^{out}\right) \qquad (1)$$

where, *AttModule*(. ) denotes the attention module (e.g., the attention modules 410A-410D) including a self-attention network and a feed-forward neural network, $S_j^{out}$ is output of the $j^{th}$ inner layer and $\alpha_{kj}$ represents a weight for the connection from the $j^{th}$ inner layer to the $k^{th}$ outer layer. The connection weight is computed via softmax as $\alpha_{kj}$ = exp($w_{kj}$) / $\Sigma_j$ exp($w_{kj}$), with learnable parameters $w_{kj}$, to enforce $0 \le \alpha_{kj} \le 1$ and $\Sigma_j(\alpha_{kj})$ = 1.

In some example embodiments, the MPT may be trained during the training process based on random minimization for an input sequence S and a target sequence T. During the training process, an objective function $L(\bar{S}_{N-1}, T)$ is obtained by applying a decoder, such as decoder 416 of Figure 4C to the output $\bar{S}_{N-1}$ of the outer network 410. The decoder 416 corresponds to the decoder 404 of Figure 4A. In some example embodiments, the inner network 408 and the outer network 410 may be optimized so that outputs of the inner network 408 and the outer network 410 may be used for downstream tasks, such as the machine translation. The inner network 408 and the outer network 410 may be optimized by minimizing sum of output of the inner network 408, $L(S_{N-1}, T)$ and output of the outer network 410, $L(\bar{S}_{N-1}, T)$. In some cases, either the output of the inner network 408 or the output of the outer network 410 may be randomly minimized for the optimization. Moreover, the sum of the output of the inner network 408 may remain same to output of the outer network 410. This may be useful in applications that involve switching between regimes with low and high computation costs, without increasing the number of parameters.

Each of the layers of the attention modules 408A-408D and the attention modules 410A-410D of the corresponding inner network 408 and the outer network 410, includes a self-attention network and a feed-forward neural network, which is described further with reference to Figure 5.

Figure 5 shows a block diagram 500 of an attention module 502 in each layer of each of the DNN in the multi-dimensional neural network 106, according to some embodiments of the present disclosure. For instance, the architecture of attention module 502 corresponds to the architecture of the attention modules 408A-408D and the attention modules 410A-410D. The attention module 502 contains one self-attention subnetwork 504 and one feed-forward neural subnetwork (FFN) 506 that includes residual connection in between. The self-attention subnetwork 504 learns information relationships in a pairwise manner. For instance, the self-attention network 504 learns relationships of words for NLP applications, such as the machine translation.

In an example scenario, the self-attention subnetwork 504 receives an input, such as a sentence S represented by $S \in R^{L \times C}$. The self-attention subnetwork 504 translates S into a key ($S_k$), a query ($S_q$) and a value ($S_v$) via linear transforms. By using an attention value between $S_k$ and $S_q$, each word of S aggregates information from other words using the self-attention. For key K, query Q and value V, the attention value can be calculated using equation (2)

$$Attention\ (Q,K,V) = Softmax\ \left(\frac{QK^T}{\sqrt{d_k}}\right)\mathrm{V} \quad (2)$$

The attention value is modulated by the square root of feature dimension, $d_k$. After aggregating information from other words in the self-attention network 504, the FFN subnetwork 506 combines the information in a position-wise manner. In some embodiments, the self-attention subnetwork 504 corresponds to a multi-head attention. A stack of such self-attention subnetwork 504 and the FFN subnetwork 506 constitutes the attention module 502, processing the input S as follows:

$$S^{mid} = Attention\ (S_q, S_k, S_v) \quad (3)$$

$$S^{out} = FFN\ (S^{mid}) \quad (4)$$

where,

$S^{mid}$ is a feature from an intermediate layer (e.g. one of the attention modules 408B-408E or one of the attention modules 410B-410E) inside each of inner network 408 and outer network 410; and
$S^{out}$ is output provided by the FFN subnetwork 506.

In some embodiments, in decoding stage of the encodings of the output, self-attention is performed on each target sentence's embedding representation T, followed by co-attention and FFN. The decoding stage can be denoted as follows, where SA stands for self-attention:

$$T_q^{SA} = Attention\ (T_q, T_k, T_v) \quad (5)$$

$$T_q^{out} = FFN\ (Attention\ (T_q^{SA}, S_k, S_v) \quad (6)$$

The word embedding layer is shared between the encoder and decoder of the encoder-decoder architecture. After obtaining the representation for next word, i.e. $T_q^{out}$ in the decoder 404, a linear transform and a softmax operation are applied for $T_q^{out}$ to obtain probabilities of possible next words. Then, a cross-entropy loss based on the probability of the next words is utilized for training all the connected networks using a back-propagation technique for ANNs.

Figure 6A shows a block diagram of a connection pattern 600A depicting a connection between two layers of two DNNs that combines a final output of a layer of a DNN with an input to a layer of subsequent DNN, according to one example embodiment of the present disclosure. An attention module 608 of an inner network, such as the inner network 408 includes a self-attention subnetwork 602A (e.g. the self-attention subnetwork 504) and a feed-forward neural subnetwork 602B (e.g., the feed-forward neural subnetwork 506), as shown in Figure 6A. The attention module 608 is a representation of each of the attention modules 408A-408D. The self-attention subnetwork 602A is connected to the FFN subnetwork 602B via a sublayer, such as an add and norm sublayer 604A. The add and norm sublayer 604A is a layer normalization step combined with the residual connection. In a similar manner, an attention module 610 of an outer network (such as the outer network 410) includes a self-attention subnetwork 606A (such as the self-attention subnetwork 504) and a feed-forward neural subnetwork 606B (such as the feed-forward neural subnetwork 506). The attention module 610 is a representation of each of the attention modules 410A-410D. The self-attention subnetwork 606A provides output to add and norm sublayer 614A and the FFN subnetwork 606B provides output to add and norm sublayer 614B. Input of the self-attention subnetwork 606A is computed as sum of an output 618A of the feed-forward neural subnetwork 602B after add and norm sublayer 604B and an input 612 of the attention module 610.

In one example embodiment, a final output 618A of the attention module 608 is added to an input of an attention module 610 prior to the residual connection associated with the self-attention subnetwork 606A of the attention module 610. The residual connection of the self-attention subnetwork 606A includes the output 618A, i.e., the sum of the output 618A and the input 612 is added to output of the self-attention subnetwork 606A in add and norm sublayer 614A.

Figure 6B shows a block diagram of a connection pattern 600B depicting a connection between two layers of two DNNs that combines a final output of a layer of a DNN with an input to a layer of subsequent DNN, according to another example embodiment of the present disclosure. In one example embodiment, a final output 618A of the attention module 608 is added to an input of the attention module 610 after the residual connection associated with the self-attention subnetwork 606A of the attention module 610. Input of the self-attention subnetwork 606A is computed as sum of the output 618A of the feed-forward neural subnetwork 602B after the add and norm sublayer 604B and the input 612 of the attention module 610. The residual connection of the self-attention subnetwork 606A does not include the output 618A, i.e., only the input 612 is added to output of the self-attention subnetwork 606A in the add and norm sublayer 614A.

Figure 6C shows a block diagram of a connection pattern 600C depicting connection between two layers of two DNNs that combines an intermediate output of a layer of the DNN with an input to a layer of subsequent DNN, according to another example embodiment of the present disclosure. In one example embodiment, an intermediate output 618B of the self-attention subnetwork 602A after the add and norm layer 604A of the attention module 608 is added to an input of the attention module 610 of the outer network 410 prior to the residual connection associated with the self-attention subnetwork 606A of the attention module 610. Input of the self-attention subnetwork 606A is computed as sum of the intermediate output 618B of the self-attention subnetwork 602A after add and norm sublayer 604A and the original input 612 of the attention module 610. The residual connection of the self-attention subnetwork 606A includes the intermediate output 618B, i.e., the sum of the intermediate output 618B and the original input 612 is added to the output of the self-attention subnetwork 606A in the add and norm sublayer 614A.

Figure 6D shows a block diagram of a connection pattern 600D depicting a connection between two layers of two DNNs that combines an intermediate output of a layer of the DNN with an input to a layer of subsequent DNN, according to another example embodiment of the present disclosure. In one example embodiment, the intermediate output 618B of the self-attention subnetwork 602A after the add and norm layer 604A of the attention module 608 is added to the input 612 of the attention module 610 after the residual connection associated with the self-attention subnetwork 606A of the attention module 610. Input of the self-attention subnetwork 606A is computed as sum of the intermediate output 618B of the self-attention subnetwork 602A after the add and norm sublayer 604A and the input 612 of the attention module 610. The residual connection of the self-attention subnetwork 606A does not include the intermediate output 618B, i.e., only the original input 612 is added to output of the self-attention subnetwork 606A in the add and norm sublayer 614A.

Figure 7 shows a table 700 of an ablation study of different models of MPT with various connection patterns, according to embodiments of the present disclosure. The table 700 shows evaluation of different models of MPT based on a BLEU score metric, a commonly used metric in machine translation. The different models include models, such as base transformer 702 (as reported in the article by Vaswani et al.), base transformer 718 (our re-implementation of Vaswani et al.'s Base Transformer), MPT model 704 with hard connection patterns [0, 1, 2, 3, 4, 5], MPT model 706 based on the connection pattern 600D, MPT model 708 based on the connection pattern 600C, MPT model 710 based on the connection pattern 600B, MPT model 712 based on the connection pattern 600A, worst searched hard connection MPT model 714, best searched hard connection MPT model 412, and MPT model 720 with the soft connections (e.g., the MPT model 418). Average performance 716 of all searched hard connection MPT models is also shown.

The table 700 shows that combining information before initiation of the residual connection leads to a better performance. The performance difference between best model (i.e., the MPT transformer 412) and least performing model (i.e., the base transformer 702) is 0.8 as the MPT transformer 412 obtains 28.4 while the base transformer 702 obtains 27.3. The different models in the table 700 are analyzed to determine factors that influence performance of the MPT of different embodiments. Further, based on the factors (such as searched network), performance tends to improve when features from deeper layers in the inner network 408 are added to features in the outer network 410, except when adding features from the last layer of the inner network 408 to features of the first layer i.e. the layer 410A of the outer network 410. Moreover, performance is also improved when features from shallow layers in the inner network 408 are directly linked to deeper layers in the outer network 410.

The MPT 402 with hard connections and MPT 418 with soft connections may achieve performance better than an evolved transformer, which is described next with reference to Figure 8A.

Figure 8A shows a table 800 of a comparison of the MPT 402 with hard connections and the MPT 418 with soft connections with state-of-art methods, collectively referred to method 802 for machine translation, according to one example embodiment of the present disclosure. The comparison is performed using datasets, such as EN-DE (English-German) and EN-FR (English-French) translation datasets. The method 802 includes a base transformer (BT), a large transformer, an evolved transformer, a Sentential Context Max Pooling, a Sentential Context Attention, a Deep Sentential Context recurrent neural network (RNN), Linear Combination + BT, Dynamic Combination + BT, Dynamic Routing + BT and EM Routing + BT.

The evolved transformer performs architecture search on a larger search space by using an evolutionary algorithm. The architecture search may be performed depending on size of self-attention heads, number of layers, different cascades between convolution and self-attention networks, dense-residual fusion and architecture search is performed jointly on an encoder and decoder of an encoder-decoder architecture neural network. The evolved transformer may also include larger search space than the MPT 402. The MPT 402 with hard connection patterns performs random search on a restricted search space. The reduced search space enables the MPT 402 to achieve better performance than the evolved transformer. The MPT 418 may estimate optimal connection pattern without the random search, which provides better performance than the evolved transformer. As shown in the table 800, BLEU metric score of the MPT 402 on the EN-DE dataset is 28.4 and on the EN-FR dataset is 41.8 with a smaller number of parameters (i.e., 61.2 for the EN-DE and 111.4 for the EN-FR). In a similar manner, the BLEU metric score of the MPT 418 on the EN-DE dataset is 28.4 and on the EN-FR dataset is 41.6 with a smaller number of parameters (i.e., 61.2 for the EN-DE and 111.4 for the EN-FR). However, BLEU metric score of the evolved transformer on the EN-DE dataset is 28.2 and on the EN-FR dataset is 41.3 with a higher number of parameters (i.e., 64.1 for the EN-DE and 221.2 for the EN-FR).

The sentential context max pooling transformer combines features from all layers in the encoder network based on addition, recurrent fusion, concatenation, or attention operators. Furthermore, the operators like concatenation and recurrent fusion may significantly increase the number of parameters. For instance, the number of parameters for the sentinel context max pooling transformer is 106.9 million, which is more than the number of parameters of the MPT 402. Thus, MPT 402 can achieve much better performance than the sentential context max pooling transformer with fewer number of parameters. Similarly, the dynamic combination with the BT and the dynamic routing with the BT shares same concept with the sentential context max pooling transformer. The dynamic combination with the BT and the dynamic routing also utilize a multi-layer information fusion mechanism based on expectation-maximization (EM) algorithm. However, the dynamic combination with the BT and the dynamic routing increases the number of parameters, such as 113.2 millions and 125.8 millions.

Notably, the MPT 402 and 418 can be also compared with deeper transformers that have more layers but only one dimension, i.e., there is no sequence of DNN and no data propagation along the second dimension. For example, a "deeper" transformer with 12 levels performs approximately as well as MPT with six layers, but deeper transformer uses more parameters and thus more memory.

Figure 8B shows an illustration of advantages of a multi-pass transformer 806 equipped with the multi-dimensional neural network 106 having multiple DNNs 810 and 812 against other transformer architectures. As shown in Figure 8B and illustrated in connection with Figures 7 and 8A, the MPT according to various embodiments can outperform or at least perform as well as a larger transformer 808 having more units and more attention heads, e.g., by either a greater number of layers and/or more parameters per layer.

Figure 9 shows a flow diagram 900 of a method for generating an output of the multi-dimensional neural network 106, according to some embodiments of the present disclosure. At block 902, input data for the AI system 100 is accepted via an input interface, such as the input interface 102.

At block 904, the input data is submitted to a multi-dimensional neural network 106 having a sequence of deep neural networks (DNN) including an inner DNN and an outer DNN. Each DNN includes a sequence of layers and corresponding layers of different DNNs have identical parameters, each DNN is configured to process the input data sequentially by the sequence of layers along a first dimension of data propagation, the DNNs in the sequence of DNNs are arranged along a second dimension of data propagation starting from the inner DNN till the outer DNN, wherein the DNNs in the sequence of DNNs are connected, such that at least an output of an intermediate layer or a final layer of a DNN is combined with an input to at least one layer of the subsequent DNN in the sequence of DNNs as described above in description of Figure 1 and Figures 2A and 2B.

At block 906, an output of the outer DNN is produced. At 908, at least a function of the output of the outer DNN is rendered. The output of the outer DNN is rendered via the output interface 110.

Figure 10 shows a block diagram of an AI system 1000, according to some embodiments of the present disclosure. The AI system 1000 corresponds to the AI system 100 of Figure 1. AI system 1000 comprises an input interface 1002, a processor 1004, a memory 1006, a network interface controller (NIC) 1012, an output interface 1018 and a storage device 1022. The memory 1006 is configured to store a multi-dimensional neural network 1008. The multi-dimensional neural network 1008 has a sequence of deep neural networks (DNN) including an inner DNN (e.g. the inner DNN 200) and an outer DNN (e.g. the outer DNN 210). Each DNN (i.e. the inner DNN 200 and the outer DNN 210) is configured to process input data, i.e. input data 1016 sequentially by the sequence of layers (e.g. the layers 202-208) along a first dimension (e.g. the first dimension 220) of data propagation. The DNNs (e.g. the inner DNN 200 and the outer DNN 210) are arranged along a second dimension (e.g. the second dimension 222) of data propagation starting from the inner DNN 200 till the outer DNN 210. Each layer of DNNs (e.g. the layers 202-208) in the sequence of DNNs are connected, such that at least one intermediate output of a layer of a DNN is combined with an input to at least one layer of the subsequent DNN in the sequence of DNNs (refer Figures 2A and 2B). In some other embodiments, the multi-dimensional neural network 1008 has at least one hidden DNN (such as the hidden DNNs 224 and 226) arranged between the inner DNN 200 and the outer DNN 210 along the second dimension 222. In some embodiments, the multi-dimensional neural network 1008 forms an encoder (e.g. the MPT 402) in an encoder-decoder architecture of a neural network. In some other embodiments, dimensional neural network 1008 with soft connection patterns forms an encoder (e.g., the MPT 418). The encoder provides an output of the outer DNN 210 that corresponds to an encoded form of the input data 1016. The encoded form of the input data 1016 is processed by a decoder (e.g. the decoder 416) to produce an output of the AI system 1000. Further, each layer of each of the DNN in the multi-dimensional neural network 1008 includes an attention module (e.g. the attention module 502). Each of the attention modules includes a self-attention subnetwork (e.g. the self-attention subnetwork 504) and a feed-forward subnetwork (e.g. the feed-forward subnetwork 506).

The input interface 1002 is configured to accept the input data 1016. In some embodiments, the AI system 1000 receives the input data 1016 via network 1014 using the NIC 1012. In some cases, the input data 1016 may be online data received via the network 1014. In some other cases, the input data 1016 may be a recorded data stored in the storage device 1022. In some embodiments, the storage device 1022 is configured to store training dataset for training the multi-dimensional neural network 1008.

The processor 1004 is configured to submit the input data 1016 to the multi-dimensional neural network 1008 to produce an output of the outer DNN 210. From the output of the outer DNN 210 at least a function is rendered that is provided via the output interface 1018. The output interface 1018 is further connected to an output device 1020. Some examples of the output device 1020 includes, but not limited to, a monitor, a display screen, and a projector.

Figure 11A shows an environment 1100 for machine translation application, according to some embodiments of the present disclosure. The environment 1100 is depicted to include machine translation devices, such as a machine translation device 1104A, a machine translation device 1104B, and a machine translation device 1104C that are distributed at different remote locations. Each of the machine translation devices 1104A, 1104B, and 1104C may be operated by corresponding operators 1102A, 1102B, and 1102C that may be speaking different languages. These machine translation devices 1104A, 1104B, and 1104C may be connected to one another via the network 1014. Each of the machine translation devices 1104A, 1104B, and 1104C includes the AI system 1000. The AI system 1000 may have trained datasets corresponding to different language-pairs, such as the EN-DE, EN-FR. The language pairs used for the machine translation may be a combination pair selected from different languages, such as English, French, Spanish, German, Italian, Chinese, Hindi, Arabic, Portuguese, Indonesian, Korean, Russian, Japanese, etc. In some cases, the training dataset may include a plurality of sentence pairs, such as 4.5 million sentence pairs. In some example embodiments, each of the machine translation devices 1104A, 1104B, and 1104C may include a language detector (not shown in Figure 11A) for detecting each of the languages of the operators 1102A, 1102B, and 1102C. Additionally or alternatively, the AI system 1000 may include a speech-to-text conversion program (not shown) stored in the memory 1006 for translating the speech input into textual output.

Each of the machine translation devices 1104A, 1104B, and 1104C may include a corresponding interface controller 1106A, interface controller 1106B and interface controller 1106C. For instance, the interface controllers 1106A, 1106B, and 1106C may be arranged in the NIC 1012 connected to a display, speaker(s) and a microphone of the machine translation device 1104A, 1104B, and 1104C. The interface controllers 1106A, 1106B, and 1106C may be configured to convert speech signals of the corresponding operators (i.e., the operators 1102A, 1102B, and 1102C) received as the input data 1016 from the network 1014. The network 1014 may be an internet, a wired commination network, a wireless communication network, or a combination of at least two of them.

The input data 1016 is processed by each of the machine translation devices 1104A, 1104B, and 1104C. The process input data 1016 is translated into desired language by the corresponding machine translation devices 1104A, 1104B, and 1104C. The translated speech is provided as output to the corresponding operators 1102A, 1102B, and 1102C. For instance, the operator 1102A sends a speech signal of English language to the operator 1102B using the machine translation device 1104A. The speech in English language is received by the machine translation device 1104B. The machine translation device 1104B translates the English language into speech of German language. The translated speech is provided to the operator 1102B. Further, in some example embodiments, the machine translation devices 1104A, 1104B, and 1104C may store/record conversations among the operators 1102A, 1102B, and 1102C into a storage unit, such as the storage device 1022. The conversations may be stored as audio data or textual data using a computer-executable speech-text program stored in the memory 1006 or in the storage device 1022.

In this manner, operators in different locations speaking different languages may communicate efficiently using the machine translation device equipped with the AI system 1000. Such communications enable the operators to perform cooperative operations as is shown and described in Figure 11B.

Figure 11B is a representation 1108 of a cooperative operation system 1110 using the machine translation application of Figure 11A, according to some embodiments of the present disclosure. The cooperative system 1110 may be arranged in part of product assembly/manufacturing lines. The cooperative operation system 1110 may include a speech-to-text program (computer-executable speech-to-text program), the AI system 1000 with the architecture of the MPT 402, the NIC 1012 connected to a display 1112, a camera, a speaker, and an input device (a microphone/pointing device) via the network 1014. In this case, the network 1014 may be a wired network, wireless network, or internet.

Some embodiments are based on recognition that the cooperative operation system 1110 may provide a process data format for maintaining/recording the whole process data of manufacturing lines based on predetermined languages when an operator 1114 speak different language from other operators, such as the operators 1102A, 1102B and 1102C who working in the manufacturing lines constructed in a single facility or different facilities in different countries. In this case, the process data format may be recorded with individual languages even when the operators 1102A, 1102B, 1102C and 1114 use different instruction languages.

The NIC 1012 of the AI system 1000 may be configured to communicate with a manipulator, such as a robot 1116 via the network 1014. The robot 1116 may include a manipulator controller 1118 and a sub-manipulator 1120 connected to a manipulator state detector 1122, in which the sub-manipulator 1120 is configured to assemble workpieces 1124 for manufacturing parts of a product or finalizing the product. Further, the NIC 1012 may be connected to an object detector 1126, via the network 1014. The object detector 1126 may be arranged so as to detect a state of the workpiece 1124, the sub-manipulator 1120, and the manipulator state detector 1122 connected to the manipulator controller 1118 arranged in the robot 1116. The manipulator state detector 1122 detects and transmits manipulator state signals (S) to the manipulator controller 1118. The manipulator controller 1118 then provides process flows or instructions based on the manipulator state signals (S).

The display 1112 may display the process flows or instructions representing process steps for assembling products based on a (predesigned) manufacturing method. The manufacturing method may be received via the network 1014 and stored into the memory 1006 or the storage device 1022. For instance, when the operator 1114 checks a condition of assembled parts of a product or an assembled product (while performing a quality control process according to a format, such as process record format), an audio input may be provided via the microphone of the cooperative operation system 1110 to record the quality check. The quality check may be performed based on the product manufacturing process and product specifications that may be indicated on the display 1112. The operator 1114 may also provide instructions to the robot 1116 to perform operations for the product assembly lines. Using the speech-to-text program stored in the memory 1006 or the storage device 1022, the cooperative operation system 1108 can store results confirmed by the operator 1114 into the memory 1006 or the storage device 1022 as text data using the speech-to-text program. The results may be stored with time stamps along with item numbers assigned to each assembled part or assembled product for a manufacturing product record. Further, the cooperative operation system 1108 may transmit the records to a manufacturing central computer (not shown in Figure 11B) via the network 1014, such that the whole process data of assemble lines are integrated to maintain/record the quality of the products.

The following description provides exemplary embodiments only, and is not intended to limit the scope, applicability, or configuration of the disclosure. Rather, the following description of the exemplary embodiments will provide those skilled in the art with an enabling description for implementing one or more exemplary embodiments. Contemplated are various changes that may be made in the function and arrangement of elements without departing from the spirit and scope of the subject matter disclosed as set forth in the appended claims.

Specific details are given in the following description to provide a thorough understanding of the embodiments. However, understood by one of ordinary skill in the art can be that the embodiments may be practiced without these specific details. For example, systems, processes, and other elements in the subject matter disclosed may be shown as components in block diagram form in order not to obscure the embodiments in unnecessary detail. In other instances, well-known processes, structures, and techniques may be shown without unnecessary detail in order to avoid obscuring the embodiments. Further, like reference numbers and designations in the various drawings indicated like elements.

Also, individual embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be rearranged. A process may be terminated when its operations are completed, but may have additional steps not discussed or included in a figure. Furthermore, not all operations in any particularly described process may occur in all embodiments. A process may correspond to a method, a function, a procedure, a subroutine, a subprogram, etc. When a process corresponds to a function, the function's termination can correspond to a return of the function to the calling function or the main function.

Furthermore, embodiments of the subject matter disclosed may be implemented, at least in part, either manually or automatically. Manual or automatic implementations may be executed, or at least assisted, through the use of machines, hardware, software, firmware, middleware, microcode, hardware description languages, or any combination thereof. When implemented in software, firmware, middleware or microcode, the program code or code segments to perform the necessary tasks may be stored in a machine readable medium. A processor(s) may perform the necessary tasks.

Various methods or processes outlined herein may be coded as software that is executable on one or more processors that employ any one of a variety of operating systems or platforms. Additionally, such software may be written using any of a number of suitable programming languages and/or programming or scripting tools, and also may be compiled as executable machine language code or intermediate code that is executed on a framework or virtual machine. Typically, the functionality of the program modules may be combined or distributed as desired in various embodiments.

Embodiments of the present disclosure may be embodied as a method, of which an example has been provided. The acts performed as part of the method may be ordered in any suitable way. Accordingly, embodiments may be constructed in which acts are performed in an order different than illustrated, which may include performing some acts concurrently, even though shown as sequential acts in illustrative embodiments. Further, use of ordinal terms such as "first," "second," in the claims to modify a claim element does not by itself connote any priority, precedence, or order of one claim element over another or the temporal order in which acts of a method are performed, but are used merely as labels to distinguish one claim element having a certain name from another element having a same name (but for use of the ordinal term) to distinguish the claim elements.

Although the present disclosure has been described with reference to certain preferred embodiments, it is to be understood that various other adaptations and modifications can be made.

**Claims**

1. An audio processing system including a computer-based artificial intelligence (AI) system (100, 1000), the AI system (100, 1000) comprising:

   an input interface (102) configured to accept input data, wherein the input data include an audio signal that includes speech utterance;
   a memory (104) configured to store a multi-dimensional neural network having a sequence of deep neural networks (DNN) including an inner DNN (200) and an outer DNN (210), each DNN includes a sequence of layers (202-218), said sequences including corresponding layers (202-218) which are layers of different DNNs having identical parameters, said parameters being weight values, each DNN is configured to process the input data sequentially by the sequence of layers (202-218) along a first dimension (220) of data propagation, the DNNs in the sequence of DNNs are arranged along a second dimension (222) of data propagation starting from the inner DNN (200) till the outer DNN (210), wherein the DNNs in the sequence of DNNs are connected such that an output of at least one intermediate layer (202-218) of a DNN is combined with an input to at least one earlier layer (202-218) of a subsequent DNN in the sequence of DNNs;
   a processor (108) configured to submit the input data to the multi-dimensional neural network to produce an output of the outer DNN (210); and
   an output interface (110) configured to render at least a function of the output of the outer DNN (210), the function of the output including transcription of the audio signal, such that the audio processing system is an automatic speech recognition (ASR) system.

2. The audio processing system of claim 1, wherein the multi-dimensional neural network has at least one hidden DNN arranged between the inner DNN (200) and the outer DNN (210) along the second dimension (222) of data propagation.

3. The audio processing system of claim 1, wherein one or more layers (202-218) of the inner DNN (200) are connected to multiple layers (202-218) of the outer DNN (210), multiple layers (202-218) of the inner DNN (200) are connected to a layer (202-218) of the outer DNN (210), or combination thereof.

4. The audio processing system claim 1, wherein multiple layers (202-218) of the inner DNN (200) are connected to a layer (202-218) of the subsequent DNN via a plurality of soft connections to scale outputs of the multiple layers (202-218) of the inner DNN (200) based on weights of the soft connections before adding the scaled outputs to the input of the layer (202-218) of the outer DNN (210).

5. The audio processing system of claim 4, wherein the weights of the soft connections are trained simultaneously with parameters of the multi-dimensional neural network.

6. The audio processing system of claim 1, wherein the multi-dimensional neural network forms an encoder in an encoder-decoder architecture of a multi-pass transformer (MPT), such that the output of the outer DNN includes encodings of the input data processed by a decoder (416) to produce an output of the AI system via the output interface (110), wherein each layer (202-218) of each of the DNN in the multi-dimensional neural network includes an attention module (502) and each attention module (502) includes a self-attention subnetwork (504) followed by a feed-forward subnetwork (506).

7. The audio processing system of claim 6, wherein each of the DNNs in the multi-dimensional neural network includes a residual connection before each attention module (502) and between the self-attention subnetwork (504) and the feed-forward subnetwork (506), in particular wherein one of the following is further provided:

   a connection between two layers (202-218) of two DNNs of the sequence of DNNs combines an output of a layer (202-218) of the first DNN with an input to a layer (202-218) of the subsequent DNN, wherein the output is added to the input of the layer (202-218) of the subsequent DNN prior to a residual connection of the self-attention subnetwork (504) of the attention module (502) of the layer (202-218) of the subsequent DNN;
   a connection between two layers of two DNNs of the sequence of DNNs combines an output of a layer (202-218) of the first DNN of the sequence of DNNs with an input to a layer (202-218) of the subsequent DNN, wherein the output is added to the input of the layer (202-218) of the subsequent DNN after a residual connection of the self-attention subnetwork (504) of the attention module (502) of the layer (202-218) of the subsequent DNN;
   a connection between two layers (202-218) of two DNNs of the sequence of DNNs combines an intermediate output of a layer of the first DNN with an input to a layer (202-218) of the subsequent DNN, wherein the output is added to the input of the layer (202-218) of the subsequent DNN prior to a residual connection of the self-attention subnetwork (504) of the attention module (502) of the layer (202-218) of the subsequent DNN;
   a connection between two layers (202-218) of two DNNs of the sequence of DNNs combines an intermediate output of a layer of the first DNN with an input to a layer (202-218) of the subsequent DNN, wherein the output is added to the input of the layer (202-218) of the subsequent DNN after a residual connection of the self-attention subnetwork (504) of the attention module (502) of the layer (202-218) of the subsequent DNN.

8. A method, to be performed by an audio processing system, for generating an output of an outer deep neural network (DNN) of a multi-dimensional neural network, wherein the method uses a processor (108) coupled with stored instructions implementing the method, wherein the instructions, when executed by the processor (108) carry out at least some steps of the method, comprising:

   accepting input data via an input interface (102), wherein the input data include an audio signal that includes speech utterance;
   submitting the input data to the multi-dimensional neural network having a sequence of deep neural networks (DNN) including an inner DNN (200) and an outer DNN (210), each DNN includes a sequence of layers (202-218), said sequences including corresponding layers (202-218) which are layers of different DNNs having identical parameters, said parameters being weight values, each DNN is configured to process the input data sequentially by the sequence of layers (202-218) along a first dimension of data propagation, the DNNs in the sequence of DNNs are arranged along a second dimension of data propagation starting from the inner DNN (200) till the outer DNN (210), wherein the DNNs in the sequence of DNNs are connected and at least an output of an intermediate layer (202-218) of a DNN is combined with an input to at least one earlier layer (202-218) of a subsequent DNN in the sequence of DNNs;
   generating an output of the outer DNN (210); and
   rendering at least a function of the output of the outer DNN (210), the function of the output including transcription of the audio signal, such that the audio processing system is an automatic speech recognition (ASR) system.

9. The method of claim 8, wherein one or more layers (202-218) of the inner DNN (200) are connected to multiple layers (202-218) of the subsequent DNN via a plurality of soft connections that scale outputs of the one or more layers (202-218) of the inner DNN (200) before adding the scaled outputs to the multiple layers (202-218) of the outer DNN (210); and in particular wherein the soft connections scale the outputs based on weights trained simultaneously with parameters of the multi-dimensional neural network or wherein the sequence of deep neural networks is fully connected with the soft connections, such that all layers (202-218) of the inner DNN (200) are connected to all layers (202-218) of the subsequent DNN with different weights determined by training simultaneously with the parameters of the multi-dimensional neural network.

10. The method of claim 8, further comprising:

forming an encoder (402) in an encoder-decoder architecture of a neural network based on the multi-dimensional neural network, such that the output of the outer DNN (200) includes the encodings of the input data processed by a decoder (404) to produce an output of an AI system (100, 1000), wherein each layer (202-218) of each of the DNN in the multi-dimensional neural network includes an attention module (502) and each attention module (502) includes a self-attention subnetwork (504) followed by a feed-forward subnetwork (506); and

analyzing a residual connection in each of the DNNs in the multi-dimensional neural network before each attention module (502) and between a self-attention subnetwork (504) and a feed-forward subnetwork (506) of the attention module (502).

## Patentansprüche

1.  Audioverarbeitungssystem, umfassend ein computergestütztes System der künstlichen Intelligenz (KI) (100, 1000), wobei das KI-System (100, 1000) umfasst:

    eine Eingabeschnittstelle (102), die eingerichtet ist, Eingabedaten zu akzeptieren, wobei die Eingabedaten ein Audiosignal enthalten, das eine Sprachäußerung enthält;
    einen Speicher (104), der ausgelegt ist, ein mehrdimensionales neuronales Netz, enthaltend eine Abfolge von tiefen neuronalen Netzen (DNN), umfassend ein inneres DNN (200) und ein äußeres DNN (210), zu speichern, wobei jedes DNN eine Abfolge von Schichten (202-218) umfasst, wobei die Abfolgen entsprechende Schichten (202-218) enthalten, welche Schichten verschiedener DNNs mit identischen Parametern sind, wobei die Parameter Gewichtungswerte sind, jedes DNN ausgelegt ist, die Eingabedaten sequentiell durch die Abfolge von Schichten (202-218) entlang einer ersten Dimension (220) von Datenpropagierung zu verarbeiten, die DNNs in der Abfolge von DNNs entlang einer zweiten Dimension (222) von Datenpropagierung angeordnet sind, beginnend mit dem inneren DNN (200) bis zum äußeren DNN (210), wobei die DNNs in der Abfolge von DNNs verbunden sind, so dass eine Ausgabe von mindestens einer Zwischenschicht (202-218) eines DNN mit einer Eingabe in mindestens eine frühere Schicht (202-218) eines nachfolgenden DNN in der Abfolge von DNNs kombiniert wird;
    einen Prozessor (108), der ausgelegt ist, die Eingabedaten an das mehrdimensionale neuronale Netz zu übermitteln, um eine Ausgabe des äußeren DNN (210) zu erzeugen; und
    eine Ausgabeschnittstelle (110), die ausgelegt ist, mindestens eine Funktion der Ausgabe des äußeren DNN (210) zu rendern, wobei die Funktion der Ausgabe Transkription des Audiosignals umfasst, so dass das Audioverarbeitungssystem ein automatisches Spracherkennungs-(ASR)-System ist.

2.  Audioverarbeitungssystem nach Anspruch 1, wobei das mehrdimensionale neuronale Netz mindestens ein verborgenes DNN aufweist, das zwischen dem inneren DNN (200) und dem äußeren DNN (210) entlang der zweiten Dimension (222) von Datenpropagierung angeordnet ist.

3.  Audioverarbeitungssystem nach Anspruch 1, wobei eine oder mehrere Schichten (202-218) des inneren DNN (200) mit mehreren Schichten (202-218) des äußeren DNN (210) verbunden sind, mehrere Schichten (202-218) des inneren DNN (200) mit einer Schicht (202-218) des äußeren DNN (210) verbunden sind, oder eine Kombination davon.

4.  Audioverarbeitungssystem nach Anspruch 1, wobei mehrere Schichten (202 - 218) des inneren DNN (200) mit einer Schicht (202 - 218) des nachfolgenden DNN über eine Vielzahl von weichen Verbindungen verbunden sind, um Ausgaben der mehreren Schichten (202 - 218) des inneren DNN (200) auf der Grundlage von Gewichtungen der weichen Verbindungen zu skalieren, bevor die skalierten Ausgaben zu der Eingabe der Schicht (202 - 218) des äußeren DNN (210) hinzugefügt werden.

5.  Audioverarbeitungssystem nach Anspruch 4, wobei die Gewichtungen der weichen Verbindungen gleichzeitig mit Parametern des mehrdimensionalen neuronalen Netzes trainiert werden.

6.  Audioverarbeitungssystem nach Anspruch 1, wobei das mehrdimensionale neuronale Netz einen Kodierer in einer Kodierer-Dekodierer-Architektur eines Multipass-Transformators (MPT) bildet, so dass die Ausgabe des äußeren DNN Kodierungen der Eingabedaten enthält, die von einem Dekodierer (416) verarbeitet werden, um eine Ausgabe des KI-Systems über die Ausgabeschnittstelle (110) zu erzeugen, wobei jede Schicht (202-218) jedes DNN in dem mehrdimensionalen neuronalen Netz ein Attention-Modul (502) enthält und jedes Attention-Modul (502) ein Self-Attention-Teilnetz (504) gefolgt von einem Feed-Forward-Teilnetz (506) enthält.

**7.** Audioverarbeitungssystem nach Anspruch 6, wobei jedes der DNNs in dem mehrdimensionalen neuronalen Netz eine Restverbindung vor jedem Attention-Modul (502) und zwischen dem Self-Attention-Teilnetz (504) und dem Feed-Forward-Teilnetz (506) enthält, wobei insbesondere eines der folgenden Merkmale vorgesehen ist:

eine Verbindung zwischen zwei Schichten (202-218) von zwei DNNs der Abfolge von DNNs kombiniert eine Ausgabe einer Schicht (202-218) des ersten DNN mit einer Eingabe in eine Schicht (202-218) des nachfolgenden DNNs, wobei die Ausgabe zu der Eingabe der Schicht (202-218) des nachfolgenden DNN vor einer Restverbindung des Self-Attention-Teilnetzes (504) des Attention-Moduls (502) der Schicht (202-218) des nachfolgenden DNN hinzugefügt wird;

eine Verbindung zwischen zwei Schichten von zwei DNNs der Abfolge von DNNs kombiniert eine Ausgabe einer Schicht (202-218) des ersten DNN der Abfolge von DNNs mit einer Eingabe in eine Schicht (202-218) des nachfolgenden DNN, wobei die Ausgabe zu der Eingabe der Schicht (202-218) des nachfolgenden DNN nach einer Restverbindung des Self-Attention-Teilnetzes (504) des Attention-Moduls (502) der Schicht (202-218) des nachfolgenden DNNs hinzugefügt wird;

eine Verbindung zwischen zwei Schichten (202-218) von zwei DNNs der Abfolge von DNNs kombiniert eine Zwischenausgabe einer Schicht des ersten DNN mit einer Eingabe in eine Schicht (202-218) des nachfolgenden DNN, wobei die Ausgabe zu der Eingabe der Schicht (202-218) des nachfolgenden DNN vor einer Restverbindung des Self-Attention-Teilnetzes (504) des Attention-Moduls (502) der Schicht (202-218) des nachfolgenden DNN hinzugefügt wird;

eine Verbindung zwischen zwei Schichten (202-218) von zwei DNNs der Abfolge von DNNs kombiniert eine Zwischenausgabe einer Schicht des ersten DNN mit einer Eingabe in eine Schicht (202-218) des nachfolgenden DNN, wobei die Ausgabe zu der Eingabe der Schicht (202-218) des nachfolgenden DNN nach einer Restverbindung des Self-Attention-Teilnetzes (504) des Attention-Moduls (502) der Schicht (202-218) des nachfolgenden DNN hinzugefügt wird.

**8.** Verfahren, das durch ein Audioverarbeitungssystem durchzuführen ist, zur Erzeugung einer Ausgabe eines äußeren tiefen neuronalen Netzes (DNN) eines mehrdimensionalen neuronalen Netzes, wobei das Verfahren einen Prozessor (108) nutzt, der mit gespeicherten Anweisungen gekoppelt ist, die das Verfahren implementieren, wobei die Anweisungen bei Ausführung durch den Prozessor (108) zumindest einige Schritte des Verfahrens ausführen, umfassend:

Akzeptieren von Eingabedaten über eine Eingabeschnittstelle (102), wobei die Eingabedaten ein Audiosignal enthalten, das eine Sprachäußerung enthält;

Übermitteln der Eingabedaten an das mehrdimensionale neuronale Netz, enthaltend eine Abfolge von tiefen neuronalen Netzen (DNN), umfassend ein inneres DNN (200) und ein äußeres DNN (210), jedes DNN eine Abfolge von Schichten (202-218) enthält, wobei die genannten Abfolgen entsprechende Schichten (202-218) enthalten, die Schichten verschiedener DNNs mit identischen Parametern sind, wobei die Parametern Gewichtungswerte sind, jedes DNN ausgelegt ist, die Eingabedaten sequentiell durch die Abfolge von Schichten (202-218) entlang einer ersten Dimension von Datenpropagierung zu verarbeiten, die DNNs in der Abfolge von DNNs entlang einer zweiten Dimension von Datenpropagierung angeordnet sind, beginnend mit dem inneren DNN (200) bis zum äußeren DNN (210), wobei die DNNs in der Abfolge von DNNs verbunden sind und mindestens eine Ausgabe einer Zwischenschicht (202-218) eines DNN mit einer Eingabe in mindestens eine frühere Schicht (202-218) eines nachfolgenden DNN in der Abfolge von DNNs kombiniert wird;

Erzeugen einer Ausgabe des äußeren DNN (210); und

Rendern zumindest einer Funktion der Ausgabe des äußeren DNN (210), wobei die Funktion der Ausgabe Transkription des Audiosignals umfasst, so dass das Audioverarbeitungssystem ein automatisches Spracherkennungs-(ASR)-System ist.

**9.** Verfahren nach Anspruch 8, wobei eine oder mehrere Schichten (202-218) des inneren DNN (200) mit mehreren Schichten (202-218) des nachfolgenden DNN über eine Vielzahl von weichen Verbindungen verbunden sind, die Ausgaben der einen oder mehreren Schichten (202-218) des inneren DNN (200) skalieren, bevor die skalierten Ausgaben zu den mehreren Schichten (202-218) des äußeren DNN (210) hinzugefügt werden; und wobei die weichen Verbindungen insbesondere die Ausgänge auf der Grundlage von Gewichtungen skalieren, die gleichzeitig mit Parametern des mehrdimensionalen neuronalen Netzes trainiert werden, oder wobei die Abfolge von tiefen neuronalen Netzen vollständig mit den weichen Verbindungen verbunden ist, so dass alle Schichten (202-218) des inneren DNN (200) mit allen Schichten (202-218) des nachfolgenden DNN mit unterschiedlichen Gewichtungen verbunden sind, die durch gleichzeitiges Trainieren mit den Parametern des mehrdimensionalen neuronalen Netzes bestimmt werden.

**10.** Verfahren nach Anspruch 8, ferner umfassend:

Bilden eines Kodierers (402) in einer Kodierer-Dekodierer-Architektur eines neuronalen Netzes, das auf dem mehrdimensionalen neuronalen Netz basiert, so dass die Ausgabe des äußeren DNN (200) die Kodierungen der Eingabedaten enthält, die von einem Dekodierer (404) verarbeitet werden, um eine Ausgabe eines KI-Systems (100, 1000) zu erzeugen, wobei jede Schicht (202-218) jedes DNN in dem mehrdimensionalen neuronalen Netz ein Attention-Modul (502) enthält und jedes Attention-Modul (502) ein Self-Attention-Teilnetz (504) gefolgt von einem Feed-Forward-Teilnetz (506) enthält; und

Analysieren einer Restverbindung in jedem der DNNs in dem mehrdimensionalen neuronalen Netz vor jedem Attention-Modul (502) und zwischen einem Self-Attention-Teilnetz (504) und einem Feed-Forward-Teilnetz (506) des Attention-Moduls (502).

**Revendications**

**1.** Système de traitement audio comprenant un système d'intelligence artificielle (IA) basé sur un ordinateur (100, 1000), le système d'IA (100, 1000) comprenant :

une interface d'entrée (102) configurée pour accepter des données d'entrée, les données d'entrée comprenant un signal audio qui inclut une émission de parole ;

une mémoire (104) configurée pour stocker un réseau neuronal multidimensionnel ayant une séquence de réseaux neuronaux profonds (DNN) comprenant un DNN interne (200) et un DNN externe (210), chaque DNN comprend une séquence de couches (202-218), lesdites séquences comprenant des couches correspondantes (202-218) qui sont des couches de différents DNN ayant des paramètres identiques, lesdits paramètres étant des valeurs de poids, chaque DNN est configuré pour traiter les données d'entrée de manière séquentielle par la séquence de couches (202-218) le long d'une première dimension (220) de propagation de données, les DNN dans la séquence de DNN sont disposés le long d'une deuxième dimension (222) de propagation des données en commençant par le DNN interne (200) jusqu'au DNN externe (210), dans lequel les DNN dans la séquence de DNN sont connectés de telle sorte qu'une sortie d'au moins une couche intermédiaire (202-218) d'un DNN est combinée avec une entrée dans au moins une couche antérieure (202-218) d'un DNN ultérieur dans la séquence de DNN ;

un processeur (108) configuré pour soumettre les données d'entrée au réseau neuronal multidimensionnel afin de produire une sortie du DNN extérieur (210) ; et

une interface de sortie (110) configurée pour restituer au moins une fonction de la sortie du DNN externe (210), la fonction de la sortie comprenant la transcription du signal audio, de sorte que le système de traitement audio soit un système de reconnaissance automatique de la parole (ASR).

**2.** Système de traitement audio selon la revendication 1, dans lequel le réseau neuronal multidimensionnel a au moins un DNN caché disposé entre le DNN interne (200) et le DNN externe (210) le long de la deuxième dimension (222) de la propagation des données.

**3.** Système de traitement audio selon la revendication 1, dans lequel une ou plusieurs couches (202-218) du DNN interne (200) sont connectées à plusieurs couches (202-218) du DNN externe (210), plusieurs couches (202-218) du DNN interne (200) sont connectées à une couche (202-218) du DNN externe (210), ou une combinaison de celles-ci.

**4.** Système de traitement audio selon la revendication 1, dans lequel plusieurs couches (202-218) du DNN interne (200) sont connectées à une couche (202-218) du DNN suivant via une pluralité de connexions logicielles pour mettre à l'échelle les sorties des multiples couches (202-218) du DNN interne (200) sur la base des poids des connexions logicielles avant d'ajouter les sorties mises à l'échelle à l'entrée de la couche (202-218) du DNN externe (210).

**5.** Système de traitement audio selon la revendication 4, dans lequel les poids des connexions logicielles sont entraînés simultanément avec les paramètres du réseau neuronal multidimensionnel.

**6.** Système de traitement audio selon la revendication 1, dans lequel le réseau neuronal multidimensionnel forme un codeur dans une architecture codeur-décodeur d'un transformateur multipasse (MPT), de sorte que la sortie du DNN extérieur comprend des codages des données d'entrée traitées par un décodeur (416) pour produire une sortie du système d'IA via l'interface de sortie (110), dans lequel chaque couche (202-218) de chaque réseau neuronal multidimensionnel comprend un module d'attention (502) et chaque module d'attention (502) comprend un sous-réseau d'auto-attention (504) suivi d'un sous-réseau de précompensation (506).

7. Système de traitement audio selon la revendication 6, dans lequel chacun des réseaux neuronaux multidimensionnels comprend une connexion résiduelle avant chaque module d'attention (502) et entre le sous-réseau d'auto-attention (504) et le sous-réseau de précompensation (506), en particulier dans lequel l'un des éléments suivants est également fourni :

une connexion entre deux couches (202-218) de deux DNN de la séquence de DNN combine une sortie d'une couche (202-218) du premier DNN avec une entrée dans une couche (202-218) du DNN suivant, la sortie étant ajoutée à l'entrée de la couche (202-218) du DNN suivant avant une connexion résiduelle du sous-réseau d'auto-attention (504) du module d'attention (502) de la couche (202-218) du DNN suivant ;
une connexion entre deux couches de deux DNN de la séquence de DNN combine une sortie d'une couche (202-218) du premier DNN de la séquence de DNN avec une entrée dans une couche (202-218) du DNN suivant, la sortie étant ajoutée à l'entrée de la couche (202-218) du DNN suivant après une connexion résiduelle du sous-réseau d'auto-attention (504) du module d'attention (502) de la couche (202-218) du DNN suivant ;
une connexion entre deux couches (202-218) de deux DNN de la séquence de DNN combine une sortie intermédiaire d'une couche du premier DNN avec une entrée dans une couche (202-218) du DNN suivant, la sortie étant ajoutée à l'entrée de la couche (202-218) du DNN suivant avant une connexion résiduelle du sous-réseau d'auto-attention (504) du module d'attention (502) de la couche (202-218) du DNN suivant ;
une connexion entre deux couches (202-218) de deux DNN de la séquence de DNN combine une sortie intermédiaire d'une couche du premier DNN avec une entrée dans une couche (202-218) du DNN suivant, la sortie étant ajoutée à l'entrée de la couche (202-218) du DNN suivant après une connexion résiduelle du sous-réseau d'auto-attention (504) du module d'attention (502) de la couche (202-218) du DNN suivant.

8. Procédé, à exécuter par un système de traitement audio, pour générer une sortie d'un réseau neuronal profond extérieur (DNN) d'un réseau neuronal multidimensionnel, dans lequel le procédé utilise un processeur (108) couplé à des instructions stockées mettant en oeuvre le procédé, dans lequel les instructions, lorsqu'elles sont exécutées par le processeur (108), exécutent au moins certaines étapes du procédé, comprenant :

accepter des données d'entrée via une interface d'entrée (102), les données d'entrée comprenant un signal audio qui inclut une émission de parole ;
soumettre les données d'entrée au réseau neuronal multidimensionnel ayant une séquence de réseaux neuronaux profonds (DNN) comprenant un DNN interne (200) et un DNN externe (210), chaque DNN comprend une séquence de couches (202- 218), lesdites séquences comprenant des couches correspondantes (202-218) qui sont des couches de différents DNN ayant des paramètres identiques, lesdits paramètres étant des valeurs de poids, chaque DNN est configuré pour traiter les données d'entrée de manière séquentielle par la séquence de couches (202-218) le long d'une première dimension de propagation des données, les DNN de la séquence de DNN sont disposés le long d'une deuxième dimension de propagation des données, en commençant par le DNN interne (200) jusqu'au DNN externe (210), dans lequel les DNN de la séquence de DNN sont connectés et au moins une sortie d'une couche intermédiaire (202-218) d'un DNN est combinée avec une entrée dans au moins une couche antérieure (202-218) d'un DNN ultérieur dans la séquence de DNN ;
générer une sortie du DNN externe (210) ; et
restituer au moins une fonction de la sortie du DNN externe (210), la fonction de la sortie comprenant la transcription du signal audio, de sorte que le système de traitement audio soit un système de reconnaissance automatique de la parole (ASR).

9. Procédé selon la revendication 8, dans lequel une ou plusieurs couches (202-218) du DNN interne (200) sont connectées à plusieurs couches (202-218) du DNN suivant via une pluralité de connexions logicielles qui mettent à l'échelle les sorties de la ou des couches (202-218) du DNN interne (200) avant d'ajouter les sorties mises à l'échelle aux plusieurs couches (202-218) du DNN externe (210) ; et en particulier dans lequel les connexions logicielles mettent à l'échelle les sorties sur la base de poids entraînés simultanément avec les paramètres du réseau neuronal multidimensionnel ou dans lequel la séquence de réseaux neuronaux profonds est entièrement connectée avec les connexions logicielles, de sorte que toutes les couches (202-218) du DNN interne (200) sont connectées à toutes les couches (202-218) du DNN suivant avec des poids différents déterminés par entraînement simultané avec les paramètres du réseau neuronal multidimensionnel.

**10.** Procédé selon la revendication 8, comprenant en outre :

former un codeur (402) dans une architecture codeur-décodeur d'un réseau neuronal basé sur le réseau neuronal multidimensionnel, de sorte que la sortie du DNN extérieur (200) comprend les encodages des données d'entrée traitées par un décodeur (404) pour produire une sortie d'un système d'IA (100, 1000), dans lequel chaque couche (202-218) de chaque DNN dans le réseau neuronal multidimensionnel comprend un module d'attention (502) et chaque module d'attention (502) comprend un sous-réseau d'auto-attention (504) suivi d'un sous-réseau de précompensation (506) ; et

analyser une connexion résiduelle dans chacun des réseaux neuronaux multidimensionnels avant chaque module d'attention (502) et entre un sous-réseau d'auto-attention (504) et un sous-réseau de précompensation (506) du module d'attention (502).

FIG.1

100

MEMORY 104

MULTI-DIMENSIONAL
NEURAL NETWORK (NN)
106

INPUT
INTERFACE 102

PROCESSOR
108

OUTPUT
INTERFACE 110

FIG.2A

FIRST DIMENSION 220

SECOND DIMENSION 222

OUTPUT 224

FIG.2B

FIG.3

300

INPUT DATA 302

DATA
COLLECTION

304

SUBMISSION OF
INPUT DATA

306

PROCESSING OF
INPUT DATA

308

RENDER A
FUNCTION OF AN
OUTPUT DATA

310

OUTPUT DATA 312

EP 3 987 450 B1

FIG.4A

EP 3 987 450 B1

400

ARTIFICIAL INTELLIGENCE
SYSTEM 100

SOURCE SENTENCE 406A

MULTI-PASS TRANSFORMER
402

DECODER 404

TARGET SENTENCE 406B

FIG.4B

FIRST DIMENSION 220

408

408A ATTENTION MODULE

408B ATTENTION MODULE

408C ATTENTION MODULE

408D ATTENTION MODULE

410

410A ATTENTION MODULE

410B ATTENTION MODULE

410C ATTENTION MODULE

410D ATTENTION MODULE

FIRST-PASS OUTPUT   SECOND DIMENSION 222   SECOND-PASS OUTPUT

402

EP 3 987 450 B1

30

FIG.4C

## FIG.4D

FIRST DIMENSION 220

418

408

410

418d

408A — ATTENTION MODULE
410A — ATTENTION MODULE

$w_1$
$w_2$
$w_3$
$w_4$

408B — ATTENTION MODULE
410B — ATTENTION MODULE

408C — ATTENTION MODULE
410C — ATTENTION MODULE

408D — ATTENTION MODULE
410D — ATTENTION MODULE

FIRST-PASS OUTPUT

SECOND DIMENSION 222

SECOND-PASS OUTPUT

EP 3 987 450 B1

FIG.5

500

502 ATTENTION MODULE

SELF –ATTENTION SUBNETWORK 504

FEED-FORWARD NEURAL SUBNETWORK 506

EP 3 987 450 B1

FIG.6A

600A

612

608

SELF –ATTENTION
SUBNETWORK
602A

604A

610

SELF –ATTENTION
SUBNETWORK
606A

614A

FEED-FORWARD
NEURAL
SUBNETWORK
602B

604B

FEED-FORWARD
NEURAL
SUBNETWORK
606B

614B

618A

EP 3 987 450 B1

FIG.6B

600B

608 — SELF–ATTENTION SUBNETWORK 602A
604A
FEED-FORWARD NEURAL SUBNETWORK 602B
604B
618A

612
610 — SELF–ATTENTION SUBNETWORK 606A
614A
FEED-FORWARD NEURAL SUBNETWORK 606B
614B

## FIG.6C

FIG.6D

EP 3 987 450 B1

37

**FIG.7**

700

| Model | BLEU score |
|---|---|
| 702 Base Transformer (Vaswani et al., 2017) | 27.3 |
| 718 Base Transformer (our implementation) | 27.6 |
| 704 MP Transformer [0, 1, 2, 3, 4, 5] | 28.1 |
| 706 MP Transformer [based on connection pattern 600D] | 27.3 |
| 708 MP Transformer [based on connection pattern 600C] | 27.5 |
| 710 MP Transformer [based on connection pattern 600B] | 27.8 |
| 712 MP Transformer [based on connection pattern 600A] | 28.1 |
| 714 MP Transformer [5, 2, 0, 4, 1, 3] (Worst) | 27.6 |
| 716 MP Transformer Avg. | 27.9 |
| 412 MP Transformer [0, 4, 1, 5, 2, 3] (Best) | 28.4 |
| 720 MP Transformer [Soft Connections] | 28.4 |

EP 3 987 450 B1

## FIG.8A

| Model | BLEU | | Params x 10^6 | |
|---|---|---|---|---|
| | EN-DE | EN-FR | EN-DE | EN-FR |
| Base-Transformer (BT) | 27.3 | 38.1 | 61.2 | 111.4 |
| Large Transformer | 28.4 | 41.0 | 213.0 | 310.9 |
| Evolved Transformer | 28.2 | 41.3 | 64.1 | 221.2 |
| Sentential Context Max Pooling | 27.6 | | 106.9 | |
| Sentential Context Attention | 27.8 | | 107.9 | |
| Deep Sentential Context RNN | 28.3 | 40.3 | 114.3 | 114.3 |
| Linear Combination + BT | 27.7 | | 102.7 | |
| Dynamic Combination + BT | 28.3 | | 113.2 | |
| Dynamic Routing + BT | 28.2 | | 125.8 | |
| EM Routing + BT | 28.8 | | 144.8 | |
| 12-layer Transformer | 28.5 | | 79.8 | |
| Multi-pass Transformer [0, 4, 1, 5, 2, 3] | 28.4 | 41.8 | 61.2 | 111.4 |
| Multi-pass Transformer [Soft Connections] | 28.4 | 41.6 | 61.2 | 111.4 |

800

802

402

418

FIG.8B

outperform

EP 3 987 450 B1

**FIG.9**

900

ACCEPTING INPUT DATA — 902

SUBMITTING THE INPUT DATA TO A MULTI-DIMENSIONAL NEURAL NETWORK HAVING A SEQUENCE OF DEEP NEURAL NETWORKS (DNN) INCLUDING AN INNER DNN AND AN OUTER DNN, EACH DNN INCLUDES A SEQUENCE OF LAYERS AND CORRESPONDING LAYERS OF DIFFERENT DNNs HAVE IDENTICAL PARAMETERS, EACH DNN IS CONFIGURED TO PROCESS THE INPUT DATA SEQUENTIALLY BY THE SEQUENCE OF LAYERS ALONG A FIRST DIMENSION OF DATA PROPAGATION, THE DNNs IN THE SEQUENCE OF DNNs ARE ARRANGED ALONG A SECOND DIRECTION OF DATA PROPAGATION STARTING FROM THE INNER DNN TILL THE OUTER DNN, WHEREIN THE DNNs IN THE SEQUENCE OF DNNs ARE CONNECTED AND AT LEAST AN OUTPUT OF AN INTERMEDIATE LAYER OR A FINAL LAYER OF A DNN IS COMBINED WITH AN INPUT TO AT LEAST ONE LAYER OF THE SUBSEQUENT DNN IN THE SEQUENCE OF DNNs — 904

TO PRODUCE AN OUTPUT OF OUTER DNN — 906

RENDER AT LEAST A FUNCTION OF THE OUTPUT OF THE OUTER DNN — 908

EP 3 987 450 B1

# FIG.10

FIG.11A

EP 3 987 450 B1

FIG.11B

EP 3 987 450 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20140180989 A1

**Non-patent literature cited in the description**

- **XINWEI GENG et al.** Adaptive Multi-pass Decoder for Neural Machine Translation. *PROCEEDINGS OF THE 2018 CONFERENCE ON EMPIRICAL METHODS IN NATURAL LANGUAGE PROCESSING,* 01 January 2018, 523-532